# EUROPEAN PATENT APPLICATION

(11) **EP 3 892 602 A1**
(43) Date of publication of application: **13.10.2021**
(21) Application number: 20168757.1
(22) Date of filing: 08.04.2020
(51) Int. Cl.: C07B 59/00

(54) **METHOD FOR THE PREPARATION OF DEUTERATED OR TRITIATED COMPOUNDS**

(71) Applicant: Friedrich-Alexander-Universität Erlangen-Nürnberg, 91054 Erlangen (DE)
(72) Inventor: Heinrich,, Prof. Dr. Markus, 91094 Langensendelbach (DE); Fischer,, Oliver, 91052 Erlangen (DE)
(74) Representative: Vossius & Partner Patentanwälte Rechtsanwälte mbB

(57) **Abstract**

Provided is a method for the preparation of a deuterated or tritiated aromatic compound via deuteration or tritiation of an aromatic starting compound which comprises an aromatic ring or a fused aromatic ring system which may be carbocyclic or hetercyclic and which carries at least one hydrogen atom directly bonded to a carbon ring atom of an aromatic ring, said method comprising:
a) providing a liquid composition wherein the aromatic starting compound is dissolved or dispersed in a deuterated or tritiated solvent which is not water, or in a solvent system comprising at least one deuterated or tritiated solvent which is not water; and
b) replacing at least one hydrogen atom directly bonded to a carbon ring atom of an aromatic ring comprised by the aromatic starting compound with deuterium or tritium via the transfer of at least one deuterium of tritium atom from the deuterated or tritiated solvent to the aromatic starting compound dissolved or dispersed in the liquid composition in the presence of an acid,
to convert the aromatic starting compound to a deuterated or tritiated aromatic compound which comprises an aromatic ring or a fused aromatic ring system which may be carbocyclic or hetercyclic and which carries at least one deuterium or tritium atom directly bonded to a carbon ring atom of an aromatic ring.

## Description

This disclosure relates to methods for preparing deuterated or tritiated aromatic or heteroaromatic compounds.

### Background of the Invention

The natural abundance of deuterium is around 0.015%. Deuterated compounds are widely used in several applications such as raw materials for pharmaceuticals, functional materials, analytic tracers and agricultural chemicals. Deuterated aromatic compounds are well known and utilized for the study of chemical reactions and metabolic pathways. Especially in the analytical chemistry of natural products, deuterated derivatives of said natural products are used as an internal standard for mass spectrometry, which allows quantification in a complex biological setting without prior extraction. Furthermore, certain deuterated pharmaceuticals are known to have improved properties such as enhanced metabolic stability, pharmacokinetic features and improved activity.

Current methods for the deuteration of aromatic compounds usually require costly and toxic transition metal catalysis or drastic reaction conditions such as high acid concentration, high temperature and/or high pressure. Those features do not only lead to increased costs due to low atom efficiency and high energy consumptions. Such harsh conditions also make them inapplicable for the deuteration of sophisticated and complex molecules, such as most pharmaceuticals and natural products. A particular problem that cannot be sufficiently addressed by established methods is the deuteration of aromatic compounds bearing labile functional groups. Reference can be made to Liu, K.; Williams, J.; Lee, H.; Fitzgerald, M. M.; Jensen, G. M.; Goodin, D. B.; McDermott, A. E. Solid-State Deuterium NMR of Imidazole Ligands in Cytochrome c Peroxidase. JACS 1998, 120, 10199-10202; Wähälä, K.; Rasku, S.; Parikka, K. Deuterated phytoestrogen flavonoids and isoflavonoids for quantitation. J. Chrom. B 2002, 777, 111-122; Hakala, U.; Wähälä, K. Expedient Deuterolabeling of Polyphenols in Ionic Liquids - DCl/D2O under Microwave Irradiation. J. Org. Chem. 2007, 72, 5817-5819; Golden, J. T.; Andersen, R. A.; Bergman, R. G. Exceptionally Low-Temperature Carbon-Hydrogen/Carbon-Deuterium Exchange Reactions of Organic and Organometallic Compounds Catalyzed by the Cp*(PMe3)IrH(ClCH2Cl)+ Cation. JACS 2001, 123, 5837-5838; Prechtl, M. H. G.; Hölscher, M.; Ben-David, Y.; Theyssen, N.; Loschen, R.; Milstein, D.; Leitner, W. H/D Exchange at Aromatic and Heteroaromatic Hydrocarbons Using D2O as the Deuterium Source and Ruthenium Dihydrogen Complexes as the Catalyst. Angew. Chem. Int. Ed. 2007, 46, 2269-2272; Ma, S.; Villa, G.; Thuy-Boun, P. S.; Homs, A.; Yu, J.-Q. Palladium-Catalyzed ortho-Selective C-H Deuteration of Arenes: Evidence for Superior Reactivity of Weakly Coordinated Palladacycles. Angew. Chem. Int. Ed. 2014, 53, 734-737; Vining, R. F.; Smythe, G. A.; Long, M. A. Deuterium exchange labelling of biologically important phenols, indoles and steroids. J. Label. Compd. Rad. 1981, 18, 1683-1692; Stack, D. E.; Ritonya, J.; Jakopovic, S.; Maloley-Lewis, B. Regioselective deuterium labeling of estrone and catechol estrogen metabolites. Steroids 2014, 92, 32-38.

Against this background, there is a need to develop particularly mild deuteration methods, which enable the conversion of structurally complex molecules bearing labile functionalities. In addition, such improved method should be broadly applicable with regard to solubility of the aromatic substrates. Herein, we present a new method for aromatic deuteration (and tritiation) that meets the above mentioned requirements, and which is thus a valuable tool now allowing the preparation of so far inaccessible deuterium-labeled compounds.

### SUMMARY

There is provided a method for the preparation of a deuterated or tritiated aromatic compound via deuteration or tritiation of an aromatic starting compound which comprises an aromatic ring or a fused aromatic ring system which may be carbocyclic or hetercyclic and which carries at least one hydrogen atom directly bonded to a carbon ring atom of an aromatic ring, said method comprising:
a) providing a liquid composition wherein the aromatic starting compound is dissolved or dispersed in a deuterated or tritiated solvent which is not water, or in a solvent system comprising at least one deuterated or tritiated solvent which is not water; and
b) replacing at least one hydrogen atom directly bonded to a carbon ring atom of an aromatic ring comprised by the aromatic starting compound with a deuterium or tritium atom via the transfer of at least one deuterium of tritium atom from the deuterated or tritiated solvent to the aromatic starting compound dissolved or dispersed in the liquid composition in the presence of an acid,
to convert the aromatic starting compound to a deuterated or tritiated aromatic compound which comprises an aromatic ring or a fused aromatic ring system which may be carbocyclic or hetercyclic and which carries at least one deuterium or tritium atom directly bonded to a carbon ring atom of an aromatic ring.

Surprisingly, this method allows a deuterated or tritiated aromatic compound to be efficiently obtained without the need for harsh reaction conditions or for the presence of a transition metal catalyst to assist in the replacement of hydrogen by deuterium or tritium.

Unless otherwise defined, all technical and scientific terms used herein have the same meaning as commonly understood by a person skilled in the art to which this invention belongs. All publications, patent applications, patents, and other references mentioned herein are incorporated by reference in their entirety, unless a particular passage is cited. In case of conflict, the present specification, including definitions, will control.

To the extent not described herein, many details regarding specific materials and processing teps are conventional and form part of the skilled person's common general knowledge. They may be found e.g. in textbooks and other sources such as publications, patents and online sources.

Further, unless expressly stated to the contrary, "or" refers herein to an inclusive or and not to an exclusive or. For example, a condition A or B is satisfied by any one of the following: Condition A is true (or present) and condition B is false (or not present), condition A is false (or not present) and condition B is true (or present), and both condition A and condition B are true (or present).

On this basis, the method of the invention and its preferred embodiments shall be described in further detail in the following. The information provided below on preferred embodiments of the method according to the invention, preferably on preferred embodiments for the characteristics of the aromatic starting compound, the reactants and the conditions of the method according to the invention, apply both alone and in any conceivable combination with one another.

As noted above, the method of the present invention provides a deuterated or tritiated compound, preferably a deuterated compound, which comprises an aromatic ring or a fused aromatic ring system which may be carbocyclic or hetercyclic and which carries at least one deuterium or tritium atom directly bonded to a carbon ring atom of an aromatic ring. The aromatic ring which carries at least one deuterium atom or tritium atom directly bonded to a carbon ring atom is also referred to as deuterated or tritiated aromatic ring or ring system herein.

The term "deuterated" refers to a compound or group in which deuterium ("D") is present in at least one position at an abundance level which is higher than the natural abundance level of deuterium, typically at least 100 times higher than the natural abundance level. In this context, reliance is put herein on the natural abundance level of 0.015 %, reflecting the approximate abundance of deuterium in seawater, as a reference value. Thus, in a compound comprising a deuterated aromatic ring, deuterium is typically attached in at least one position to the aromatic ring at a ratio of the number of deuterium atoms to the sum of the number of deuterium atoms plus hydrogen atoms, indicated a percentage, of 1.5 %. This ratio can be measured by determining the number of deuterium atoms in a sample of the compound at a defined position, and dividing it by the determined number of deuterium and hydrogen atoms at the same position in the total number of molecules of the compound, e.g. via NMR spectroscopy. Preferably, the deuterated compound provided by the method in accordance with the invention is a compound in which deuterium is present in at least one position at a ratio of deuterium atoms to the sum of deuterium and hydrogen atoms of 50 % or more, more preferably of 80 % or more, and most preferably of 90 % or more. By "deuteration" as it refers to a method, is meant a replacement of one or more hydrogen atoms in a compound or group with a corresponding number of deuterium atoms. A degree of deuteration of a deuterated compound, e.g. "X% deuterated" or '''X% deuteration", likewise refers to the ratio of deuterium atoms to the sum of hydrogen atoms plus deuterium atoms at a specified position in a given amount of the concerned compound, expressed as a percentage X.

The term "tritiated" refers to a compound or group in which tritium ("T") is present in at least one position at a significant abundance level, e.g. at least 1.5 %. Thus, in a compound comprising a tritiated aromatic ring, tritium is typically attached in at least one position to the aromatic ring at a ratio of the number of tritium atoms to the sum of the number of tritium atoms plus hydrogen atoms, indicated a percentage, of 1.5 %. This ratio can be measured, by determining the number of tritium atoms at a defined position in a sample of the compound, and dividing it by the determined number of tritium and hydrogen atom at the same position in the total number of molecules of the compound, e.g. via NMR spectroscopy. Preferably, the tritiated compound provided by the method in accordance with the invention is a compound in which tritium is present in at least one position at a ratio of tritium atoms to the sum of tritium and hydrogen atoms of 50 % or more, more preferably of 80 % or more, and most preferably of 90 % or more. By "tritiation" as it refers to a method, is meant a replacement of one or more hydrogen atoms in a compound or group with a corresponding number of tritium atoms. A degree of tritiation of a tritiated compound, e.g. "X% tritiated" or "'X% tritiation", likewise refers to the ratio of tritium atoms to the sum of hydrogen atoms plus tritium atoms at a specified position in a given amount of the concerned compound, expressed as a percentage X.

While it would be possible to carry out a deuteration and a tritiation simulateously with the method of the present invention, the method is typically used to provide either a deuterated or a tritiated aromatic compound, preferably a deuterated aromatic compound.

The aromatic starting compound used in the method of the present invention and the deuterated or tritiated aromatic compound prepared in the context of the method of the present invention each comprises an aromatic ring or a fused aromatic ring system. The aromatic ring or fused aromatic ring system may both be carbocylic or heterocyclic. Unless indicated otherwise, reference to an aromatic ring or aromatic ring system herein thus encompasses both carbocylic rings or ring systems and heterocyclic rings or ring systems.

The aromatic ring is an unsaturated ring with 4n+2 pi-electrons delocalized across its ring atoms, with n being a non-negative integer, such as 0, 1 or 2, preferably 1 or 2. Preferably, it is a six-membered carbocyclic aromatic ring or a five-membered heterocyclic aromatic ring which carries at least one hydrogen atom directly bonded to a carbon ring atom of the aromatic ring. Likewise, in a fused aromatic ring system, 4n+2 pi-electrons are delocalized across the ring atoms of the system with n being a non-negative integer, such as 2 or 3, preferably 2. Preferably, the fused aromatic ring system comprises a six-membered carbocyclic aromatic ring or a five-membered heterocyclic aromatic ring which carries at least one hydrogen atom directly bonded to a carbon ring atom of the aromatic ring. As will be appreciated, ring atoms are those atoms which are bonded to each other as ring members of the aromatic ring or the fused aromatic ring system. An aromatic carbon atom or a carbon atom of an aromatic ring as referred to herein represents a carbon atom which is a ring member of an aromatic ring or of a fused aromatic ring system. Likewise, any aromatic heteroatom or any heteroatom of an aromatic ring as referred to herein represents a heteroatom which is a ring member of an aromatic ring or of a system of fused aromatic rings (which are in this case heteroaromatic).

In the fused aromatic ring system, two or more, e.g. one, two or three, aromatic rings are annulated with each other. In such a fused aromatic ring system, only carbocyclic aromatic rings, only heterocyclic aromatic rings, or combinations of one or more carbocyclic and one or more heterocyclic rings may be contained.

In line with the skilled person's understanding, a carbocyclic ring is formed of carbon atoms as ring atoms. A heterocyclic ring is formed of carbon atoms and one or more, such as one, two or three, heteroatoms as ring atoms. In line with common practice, a compound containing a heterocyclic aromatic ring may also be referred to herein as a heteroaromatic compound. Examples of heteroatoms, i.e. non-carbon atoms, which may be contained as ring atoms in heterocyclic rings, are N, O, P and S atoms. If two or more heteroatoms are contained in the heterocyclic ring, they may be identical or different.

The aromatic starting compound comprises at least one hydrogen atom directly bonded to a carbon atom of an aromatic ring, and the prepared deuterated or tritiated compound comprises at least one deuterium atom or tritium atom directly bonded to a carbon atom of an aromatic ring. In line with the skilled person's understanding, this means that the hydrogen atom, or the deuterium or tritium atom, respectively, forms a covalent bond with one of the carbon ring atoms of the concerned aromatic ring.

Moreover, an aromatic ring or a fused aromatic ring system contained in the aromatic starting compound may carry a deuterium atom D or a tritium atom T directly bonded to a carbon atom of an aromatic ring in addition to the at least one hydrogen atom directly bonded to a carbon atom of an aromatic ring, e.g. in cases where the method of the invention is used to increase the content of deuterium in a deuterated aromatic starting compound. However, typically the aromatic starting compound is free of deuterium or tritium, i.e. D and T are absent from the compound or present at a level which is not higher than the natural abundance level of these isotopes.

The aromatic starting compound comprises an aromatic ring which carries at least one hydrogen atom directly bonded to a carbon ring atom thereof, or a fused aromatic ring system which carries at least one hydrogen atom directly bonded to a carbon ring atom of an aromatic ring which forms part of the fused ring aromatic ring system. In addition, the aromatic ring or fused aromatic ring system may carry one or more, such as one, two or three, substituents bonded to one or more of its ring atoms. This includes the possibility that two suitable substituents, e.g. substituents bonded to adjacent rings atoms of an aromatic ring, form a further ring, e.g. a non-aromatic ring, together with the ring atoms to which they are bonded. The deuterated or tritiated compound provided by the method in accordance with the present invention comprises an aromatic ring which carries at least one deuterium or tritium atom directly bonded to a carbon ring atom thereof, or a fused aromatic ring system which carries at least one deuterium or tritium atom directly bonded to a carbon ring atom of an aromatic ring which forms part of the fused aromatic ring system. As in the aromatic starting compound, the aromatic ring or fused aromatic ring system may carry one or more, such as one, two or three, substituents bonded to one or more of its ring atoms, and this includes the possibility that two suitable substituents, e.g. substituents bonded to adjacent rings atoms of an aromatic ring, form a further ring, e.g. a non-aromatic ring together with the ring atoms to which they are bonded.

The aromatic starting compound may thus comprise multiple carbocyclic or heterocyclic aromatic groups, such as two or three, provided that at least one aromatic group is present which provides the required aromatic ring or fused aromatic ring system which may be carbocyclic or hetercyclic and which carries at least one hydrogen atom directly bonded to a carbon ring atom of an aromatic ring. Likewise, the deuterated or tritiated compound prepared by the method of the present invention may thus comprise multiple carbocyclic or heterocyclic aromatic groups, such as two or three, provided that at least one aromatic group is present which provides the required aromatic ring or fused aromatic ring system which may be carbocyclic or hetercyclic and which carries at least one deuterium or tritium atom directly bonded to a carbon ring atom of an aromatic ring. If multiple aromatic groups are present, they may be directly bonded to each other via (a) covalent bond(s) or indirectly via a linking group.

For example, optional substituents which may be bonded to the aromatic ring or the fused aromatic ring system of the aromatic starting compound and the prepared deuterated or tritiated compound can be selected from halogen, alkyl, alkenyl, alkynyl, cycloalkyl, heterocycloalkyl, arylalkyl, heteroarylalkyl, haloalkyl, hydroxy, alkoxy, haloalkoxy, cycloalkoxy, alkenyloxy, heterocycloalkoxy, arylalkyloxy, aryloxy, heteroaryloxy, -OCOR², alkylcarbonyloxy, haloalkylcarbonyloxy, cycloalkylcarbonyloxy, arylalkylcarbonyloxy, arylcarbonyloxy, heteroarylcarbonyloxy, hydroxyalkyl, alkoxyalkyl, aryloxyalkyl, heteroaryloxyalkyl, aminoalkyl, -(CH₂)ₚ-NR²R³, -COOH, -CHO, -CN, -COR², alkylcarbonyl, haloalkylcarbonyl, cycloalkylcarbonyl, arylalkylcarbonyl, alkenylcarbonyl, arylcarbonyl, heteroarylcarbonyl, -COOR², alkoxycarbonyl, haloalkoxycarbonyl, cycloalkoxycarbonyl, arylalkoxycarbonyl, alkenyloxycarbonyl, aryloxycarbonyl, heteroaryloxycarbonyl, -CONHR², -CONR²R³, amino, nitro, -NHR², -NR²R³, 1-pyrrolidino, 1-piperidino, 1-morpholino, alkylimino, cycloalkylimino, haloalkylimino, arylalkylimino, -NR²COR³, NR²COOR³ , -NR²SO₂R³, -OCONR²R³, -O-(CH₂)ₚ-OR² , -O-(CH₂)ₚ-NR²R³, -O-(CH₂)ₚ-NR²COR³ , -O-(CH₂)ₚ-NR²COOR³, -O-(CH₂)ₚ-COOR², -O-(CH₂)ₚ-CONHR² , -O-(CH₂)ₚ-CONR²R³, -O-(CH₂)ₚ-SO₃R², -O-(CH₂)ₚ-SO₂R², -O-(CH₂)ₚ-CN, -SH, alkylthio, haloalkylthio, cycloalkylthio, arylalkylthio, arylthio, heteroarylthio, alkylsulfonyl, haloalkylsulfonyl, cycloalkylsulfonyl, arylalkylsulfonyl, arylsulfonyl, heteroarylsulfonyl, -SO₂NH₂, -SO₂NHR², -SO₂NR²R³, -SO₃R², aryl and heteroaryl;
wherein p is, independently for more than one substituent, 1, 2, 3, 4, 5, 6, 7, 8, 9 or 10;
R² is, independently for more than one substituent, hydrogen, alkyl, cycloalkyl, haloalkyl, arylalkyl, heteroarylalkyl, aryl or heteroaryl; and
R³ is, independently for more than one substituent, alkyl, cycloalkyl, haloalkyl, arylalkyl, heteroarylalkyl, aryl or heteroaryl;
and wherein one or more pairs of suitable substituents may combine to form a ring structure together with the ring atoms to which they are bonded.

In terms of their chemical structure, particularly preferred aromatic starting compounds comprise, as an aromatic ring or a fused aromatic ring system which may be carbocyclic or hetercyclic and which carries at least one hydrogen atom directly bonded to a carbon ring atom of an aromatic ring:
a carbocylic aromatic ring or fused carbocyclic aromatic ring system selected from benzene, naphthalene, fluorene, phenalene, phenantrene, pyrene, chrysene, triphenylene, naphtacene, pentacene and anthracene, all of which are optionally substituted; or
a heterocyclic aromatic ring or fused heterocyclic aromatic ring system selected from furan, pyrrole, thiophen, indole, oxazole, thiazole, and benzofuran, all of which are optionally substituted.

Still more preferably, the aromatic starting compound comprises an aromatic ring or ring system selected from benzene, pyrrole and indole, all of which are optionally substituted.

The deuterated or tritiated compound prepared from any of the starting compounds having such a particularly preferred strcuture would also comprise the aromatic ring or a fused aromatic ring system comprised by the starting compound, but would carry at least one deuterium or tritium atom directly bonded to a carbon ring atom of an aromatic ring.

As will be understood by the skilled reader, the covalent bond structure of the aromatic starting compound and of the deuterated or tritiated compound prepared by the the method in accordance with the invention, i.e. the arrangement of the atoms bonded to each other by covalent bonds, is preferably identical, except for the fact that at least one hydrogen atom directly bonded to an aromatic ring of the aromatic starting compound is replaced by a deuterium or tritium atom. Excepetions may arise e.g. in a case where a substituent attached to the aromatic ring undergoes a reaction with the solvent, such as an esterification reaction of a carboxylic acid group with an alcohol used as a solvent.

If the aromatic starting compound which comprises an aromatic ring or a fused aromatic ring system which may be carbocyclic or hetercyclic carries more than one hydrogen atom directly bonded to a carbon ring atom of an aromatic ring, at least one of these hydrogen atoms will be replaced by a deuterium or tritium atom in the deuterated or tritiated aromatic compound obtained by the method of the invention, i.e. one hydrogen atom, more than one hydrogen atom, or all hydrogen atoms directly bonded to a carbon ring atom of an aromatic ring in the starting compound may be replaced. As will be understood by the skilled reader, the number of hydrogen atoms that is replaced may depend on the time of the treatment, or on the temperature at which the treatment is carried out.

Preferably, the aromatic starting compound is characterized in line with the embodiments defined in i) and ii) below.
i) A preferred aromatic starting compound comprises a six-membered carbocyclic aromatic ring or a fused aromatic ring system comprising a six-membered carbocyclic aromatic ring, and the six-membered aromatic ring carries at least one hydrogen atom directly bonded to a carbon ring atom and further carries at least a first substituent and a second substituent. More preferably, the aromatic starting compound comprises a benzene ring. The first substituent is selected from hydroxy, alkoxy, haloalkoxy, cycloalkoxy, and alkenyloxy, preferably from hydroxy and alkoxy. The second substituent is selected from hydroxy, alkoxy, haloalkoxy, cycloalkoxy, heterocycloalkoxy, alkenyloxy, arylalkyloxy, aryloxy, heteroaryloxy, halogen, alkyl, cycloalkyl, heterocycloalkyl, aryl which is substituted with at least one substiutent selected from hydroxy and alkoxy, heteroaryl which is selected from furan, pyrrole, thiophen, indole, oxazole, thiazole, and benzofuran, amino, -NHR⁴, and -NR⁴R⁵, wherein R⁴ and R⁵ are independently selected from alkyl, cycloalkyl, haloalkyl, arylalkyl, heteroarylalkyl, aryl and heteroaryl. If the second substituent is a cycloalkyl group or a heterocycloalkyl group, the group may be fused with the six-membered aromatic ring. Preferably, the second substituent is selected from hydroxy and alkoxy. Moreover, it is preferred that the first and the second substituent are in meta-position to each other.
   The aromatic ring or fused aromatic ring system comprise one or more optional further substituents in addition to the first and the second substituent, and to the at least one hydrogen atom to be replaced by deuterium or tritium. For example, the optional further substituent(s) may be selected from halogen, alkyl, alkenyl, alkynyl, cycloalkyl, heterocycloalkyl, arylalkyl, heteroarylalkyl, haloalkyl, hydroxy, alkoxy, haloalkoxy, cycloalkoxy, heterocycloalkoxy, alkenyloxy, arylalkyloxy, aryloxy, heteroaryloxy, -OCOR², alkylcarbonyloxy, haloalkylcarbonyloxy, cycloalkylcarbonyloxy, arylalkylcarbonyloxy, arylcarbonyloxy, heteroarylcarbonyloxy, hydroxyalkyl, alkoxyalkyl, aryloxyalkyl, heteroaryloxyalkyl, aminoalkyl, -(CH₂)ₚ-NR²R³, -COOH, -CHO, -CN, -COR², alkylcarbonyl, haloalkylcarbonyl, cycloalkylcarbonyl, arylalkylcarbonyl, alkenylcarbonyl, arylcarbonyl, heteroarylcarbonyl, -COOR², alkoxycarbonyl, haloalkoxycarbonyl, cycloalkoxycarbonyl, arylalkoxycarbonyl, alkenyloxycarbonyl, aryloxycarbonyl, heteroaryloxycarbonyl, -CONHR², -CONR²R³, amino, nitro, -NHR², -NR²R³, 1-pyrrolidino, 1-piperidino, 1-morpholino, alkylimino, cycloalkylimino, haloalkylimino, arylalkylimino, -NR²COR³, NR²COOR³ , -NR²SO₂R³, -OCONR²R³, -O-(CH₂)ₚ-OR² , -O-(CH₂)ₚ-NR²R³, -O-(CH₂)ₚ-NR²COR³, -O-(CH₂)ₚ-NR²COOR³, -O-(CH₂)ₚ-COOR², -O-(CH₂)ₚ-CONHR² , -O-(CH₂)ₚ-CONR²R³, -O-(CH₂)ₚ-SO₃R², -O-(CH₂)ₚ-SO₂R², -O-(CH₂)ₚ-CN, -SH, alkylthio, haloalkylthio, cycloalkylthio, arylalkylthio, arylthio, heteroarylthio, alkylsulfonyl, haloalkylsulfonyl, cycloalkylsulfonyl, arylalkylsulfonyl, arylsulfonyl, heteroarylsulfonyl, -SO₂NH₂, -SO₂NHR², -SO₂NR²R³, -SO₃R², aryl and heteroaryl; wherein p is, independently for more than one substituent, 1, 2, 3, 4, 5, 6, 7, 8, 9 or 10; R² is, independently for more than one substituent, hydrogen, alkyl, cycloalkyl, haloalkyl, arylalkyl, heteroarylalkyl, aryl or heteroaryl; and R³ is, independently for more than one substituent, alkyl, cycloalkyl, haloalkyl, arylalkyl, heteroarylalkyl, aryl or heteroaryl; and wherein one or more pairs of suitable substituents may combine to form a ring structure together with the ring atoms of the carbocyclic aromatic group to which they are bonded.
ii) Another preferred aromatic starting compound comprises a five-membered heterocyclic aromatic ring or a fused aromatic ring system comprising a five-membered heterocyclic aromatic ring, and the five-membered aromatic ring carries at least one hydrogen atom directly bonded to a carbon atom of the aromatic ring, and may carry one or more substituents. More preferably, the five-membered heterocyclic aromatic ring or a fused aromatic ring system comprising a five-membered heterocyclic aromatic ring is selected from an optionally substituted pyrrole group, an optionally substituted thiophene group, an optionally substituted furan group and an optionally substituted indole group, still more preferably from an optionally substituted pyrrole group and an optionally substituted indole group.

For example, the one or more optional substituents may be selected from halogen, alkyl, alkenyl, alkynyl, cycloalkyl, heterocycloalkyl, arylalkyl, heteroarylalkyl, haloalkyl, hydroxy, alkoxy, haloalkoxy, cycloalkoxy, heterocycloalkoxy, alkenyloxy, arylalkyloxy, aryloxy, heteroaryloxy, -OCOR², alkylcarbonyloxy, haloalkylcarbonyloxy, cycloalkylcarbonyloxy, arylalkylcarbonyloxy, arylcarbonyloxy, heteroarylcarbonyloxy, hydroxyalkyl, alkoxyalkyl, aryloxyalkyl, heteroaryloxyalkyl, aminoalkyl, -(CH₂)ₚ-NR²R³, -COOH, -CHO, -CN, -COR², alkylcarbonyl, haloalkylcarbonyl, cycloalkylcarbonyl, arylalkylcarbonyl, alkenylcarbonyl, arylcarbonyl, heteroarylcarbonyl, -COOR², alkoxycarbonyl, haloalkoxycarbonyl, cycloalkoxycarbonyl, arylalkoxycarbonyl, alkenyloxycarbonyl, aryloxycarbonyl, heteroaryloxycarbonyl, -CONHR², -CONR²R³, amino, nitro, -NHR², -NR²R³, 1-pyrrolidino, 1-piperidino, 1-morpholino, alkylimino, cycloalkylimino, haloalkylimino, arylalkylimino, -NR²COR³, NR²COOR³, -NR²SO₂R³, -OCONR²R³ , -O-(CH₂)ₚ-OR², -O-(CH₂)ₚ-NR²R³, -O-(CH₂)ₚ-NR²COR³ , -O-(CH₂)ₚ-NR²COOR³, -O-(CH₂)ₚ-COOR² , -O-(CH₂)ₚ-CONHR², -O-(CH₂)ₚ-CONR²R³, -O-(CH₂)ₚ-SO₃R², -O-(CH₂)ₚ-SO₂R², -O-(CH₂)ₚ-CN, -SH, alkylthio, haloalkylthio, cycloalkylthio, arylalkylthio, arylthio, heteroarylthio, alkylsulfonyl, haloalkylsulfonyl, cycloalkylsulfonyl, arylalkylsulfonyl, arylsulfonyl, heteroarylsulfonyl, -SO₂NH₂, -SO₂NHR² , -SO₂NR²R³ , -SO₃R², aryl and heteroaryl; wherein p is, independently for more than one substituent, 1, 2, 3, 4, 5, 6, 7, 8, 9 or 10; R² is, independently for more than one substituent, hydrogen, alkyl, cycloalkyl, haloalkyl, arylalkyl, heteroarylalkyl, aryl or heteroaryl; and R³ is, independently for more than one substituent, alkyl, cycloalkyl, haloalkyl, arylalkyl, heteroarylalkyl, aryl or heteroaryl; and wherein one or more pairs of suitable substituents may combine to form a ring structure together with the ring atoms of the heterocyclic aromatic group to which they are bonded.

Preferably the five-membered heterocyclic aromatic ring or a fused aromatic ring system comprising a five-membered heterocyclic aromatic ring of option ii) carries at least one substituent selected from hydroxy, alkoxy, haloalkoxy, cycloalkoxy, and alkenyloxy, more preferably from hydroxy and alkoxy.

As will be understood by the skilled reader, a preferred deuterated or tritiated compound provided by the method of the present invention has a structure as defined for the aromatic starting compound in i) or ii) above, except for the fact that at least one hydrogen atom directly bonded to a carbon atom of the aromatic ring has been exchanged to a deuterium atom or tritium atom.

In line with the above, an exemplary aromatic starting compound may be illustrated by the following formula (1a), and preferably by the following formula (1b): 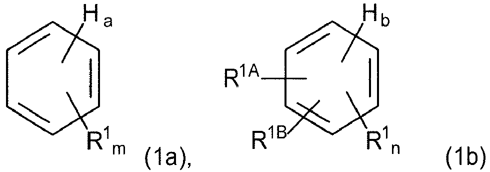 In formula (1a),
a is 1, 2, 3, 4, or 5,
m is 1, 2, 3, 4 or 5,
and a + m is 6;
R¹ is selected, independently for each occurrence within the same compound, from halogen, alkyl, alkenyl, alkynyl, cycloalkyl, heterocycloalkyl, arylalkyl, heteroarylalkyl, haloalkyl, hydroxy, alkoxy, haloalkoxy, cycloalkoxy, heterocycloalkoxy, alkenyloxy, arylalkyloxy, aryloxy, heteroaryloxy, -OCOR² , alkylcarbonyloxy, haloalkylcarbonyloxy, cycloalkylcarbonyloxy, arylalkylcarbonyloxy, arylcarbonyloxy, heteroarylcarbonyloxy, hydroxyalkyl, alkoxyalkyl, aryloxyalkyl, heteroaryloxyalkyl, aminoalkyl, (CH₂)ₚ-NR²R³, -COOH, -CHO, -CN, -COR², alkylcarbonyl, haloalkylcarbonyl, cycloalkylcarbonyl, arylalkylcarbonyl, alkenylcarbonyl, arylcarbonyl, heteroarylcarbonyl, -COOR², alkoxycarbonyl, haloalkoxycarbonyl, cycloalkoxycarbonyl, arylalkoxycarbonyl, alkenyloxycarbonyl, aryloxycarbonyl, heteroaryloxycarbonyl, -CONHR², -CONR²R³ , amino, nitro, -NHR², -NR²R³, 1-pyrrolidino, 1-piperidino, 1-morpholino, alkylimino, cycloalkylimino, haloalkylimino, arylalkylimino, -NR²COR³, NR²COOR³, -NR²SO₂R³, -OCONR²R³, -O-(CH₂)ₚ-OR² , -O-(CH₂)ₚ-NR²R³, -O-(CH₂)ₚ-NR²COR³, -O-(CH₂)ₚ-NR²COOR³, -O-(CH₂)ₚ-COOR² , -O-(CH₂)ₚ-CONHR² , -O-(CH₂)ₚ-CONR²R³, -O-(CH₂)ₚ-SO₃R², -O-(CH₂)ₚ-SO₂R², -O-(CH₂)ₚ-CN, -SH, alkylthio, haloalkylthio, cycloalkylthio, arylalkylthio, arylthio, heteroarylthio, alkylsulfonyl, haloalkylsulfonyl, cycloalkylsulfonyl, arylalkylsulfonyl, arylsulfonyl, heteroarylsulfonyl, -SO₂NH₂, -SO₂NHR² , -SO₂NR²R³ , -SO₃R², aryl and heteroaryl;
   wherein p is 1, 2, 3, 4, 5, 6, 7, 8, 9 or 10;
   R² is hydrogen, alkyl, cycloalkyl, haloalkyl, arylalkyl, heteroarylalkyl, aryl or heteroaryl; and
   R³ is alkyl, cycloalkyl, haloalkyl, arylalkyl, heteroarylalkyl, aryl or heteroaryl;
   and wherein one or more pairs of suitable substituents R¹ may combine to form a ring structure together with the atoms of the ring to which they are bonded.

In the preferred formula (1b)
- b: is 1, 2, 3 or 4,
- n: is 0, 1, 2 or 3 and
- b + n: is 4, and
- R^{1A}: is selected from hydroxy, alkoxy, haloalkoxy, cycloalkoxy, and alkenyloxy, preferably from hydroxy and alkoxy;
- R^{1B}: is selected from hydroxy, alkoxy, haloalkoxy, cycloalkoxy, heterocycloalkoxy, alkenyloxy, arylalkyloxy, aryloxy, heteroaryloxy, halogen, alkyl, cycloalkyl, heterocycloalkyl, aryl which is substituted with at least one substiutent selected from hydroxy and alkoxy, heteroaryl which is selected from furan, pyrrole, thiophen, indole, oxazole, thiazole, and benzofuran,amino, -NHR⁴, and -NR⁴R⁵, wherein R⁴ and R⁵ are independently selected from alkyl, cycloalkyl, haloalkyl, arylalkyl, heteroarylalkyl, aryl and heteroaryl; preferably R^{1B} is selected from hydroxy and alkoxy; and
- R¹: is defined as in formula (1a).

In formula (1b), it also is preferred that the substituents R^{1A} and R^{1B} are in meta-position to each other.

In line with established practice, the chemical bonds illustrated by the straight lines crossing a bond of the aromatic ring indicate that the concerned atom(s) or group(s) may be bonded to any one of the ring atoms of the aromatic ring.

As will be appreciated by the skilled reader, the deuterated or tritiated compound prepared by the method in accordance with the invention using a compound of formula (1a) or (1b) as an aromatic starting compound would be a deuterated or tritiated compound of formula (2a) or (2b), respectively:

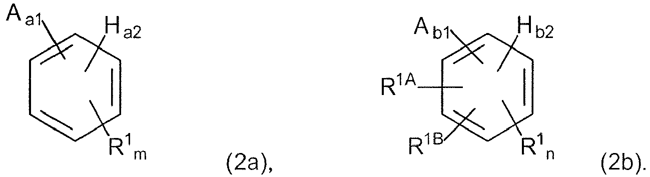

The compound of formula (2a) represents a deuterated or tritiated version of the starting compound of formula (1a), such that
A is either deuterium or tritium, preferably deuterium,
a1 is 1, 2, 3, 4 or 5; a2 is 0, 1, 2, 3 or 4, and a1 + a2 corresponds to a in the selected starting compound of formula (1a); and
the optional substituent(s) R¹, their number m and their position on the aromatic ring are determined by the substituent(s) R¹, their number m and their position on the aromatic ring in the starting compound of formula (1a).

The compound of formula (2b) represents a deuterated or tritiated version of the starting compound of formula (1b), such that
A is either deuterium or tritium, preferably deuterium,
b1 is 1, 2, 3, or 4; b2 is 0, 1, 2, or 3, and b1+b2 corresponds to b in the selected starting compound of formula (1b);
the optional substituent(s) R¹, their number n and their position on the aromatic ring are determined by the optional substituent(s) R¹, their number n and their position on the aromatic ring in the starting compound of formula (1b); and
the substituents R^{1A} and R^{1B} and their position on the aromatic ring are determined by the substituents R^{1A} and R^{1B} and their position on the aromatic ring in the starting compound of formula (1b).

Examples of an aromatic starting compound with a heteroaromatic group have a structure of formula (1c), (1d) or (1e): 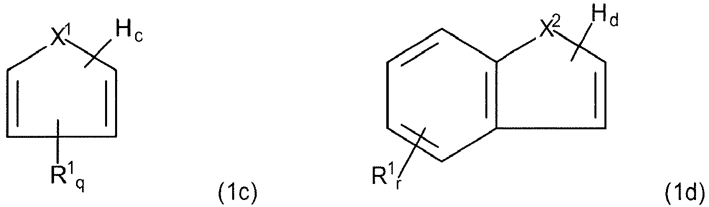 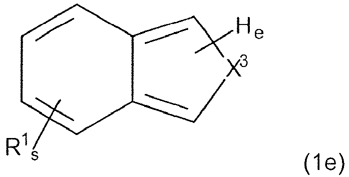 wherein
X¹, X² and X³ are independently selected from O, S, NH, or NR⁵, and preferably from NH or NR⁵,
c is an integer of 1 to 4, q is an integer of 0 to 3, and c + q is 4;
d is an integer of 1 to 6, r is an integer of 0 to 5, and d + r is 6;
e is an integer of 1 to 6, s is an integer of 0 to 5, and e + s is 6;
R¹ is selected, independently for each occurrence within the same compound, from halogen, alkyl, alkenyl, alkynyl, cycloalkyl, heterocycloalkyl, arylalkyl, heteroarylalkyl, haloalkyl, hydroxy, alkoxy, haloalkoxy, cycloalkoxy, heterocycloalkoxy, alkenyloxy, arylalkyloxy, aryloxy, heteroaryloxy, -OCOR² , alkylcarbonyloxy, haloalkylcarbonyloxy, cycloalkylcarbonyloxy, arylalkylcarbonyloxy, arylcarbonyloxy, heteroarylcarbonyloxy, hydroxyalkyl, alkoxyalkyl, aryloxyalkyl, heteroaryloxyalkyl, aminoalkyl, (CH₂)ₚ-NR²R³, -COOH, -CHO, -CN, -COR², alkylcarbonyl, haloalkylcarbonyl, cycloalkylcarbonyl, arylalkylcarbonyl, alkenylcarbonyl, arylcarbonyl, heteroarylcarbonyl, -COOR², alkoxycarbonyl, haloalkoxycarbonyl, cycloalkoxycarbonyl, arylalkoxycarbonyl, alkenyloxycarbonyl, aryloxycarbonyl, heteroaryloxycarbonyl, -CONHR², -CONR²R³, amino, nitro, -NHR², -NR²R³, 1-pyrrolidino, 1-piperidino, 1-morpholino, alkylimino, cycloalkylimino, haloalkylimino, arylalkylimino, -NR²COR³, NR²COOR³, -NR²SO₂R³, -OCONR²R³, -O-(CH₂)ₚ-OR², -O-(CH₂)ₚ-NR²R³, -O-(CH₂)ₚ-NR²COR³, -O-(CH₂)ₚ-NR²COOR³, -O-(CH₂)ₚ-COOR², -O-(CH₂)ₚ-CONHR² , -O-(CH₂)ₚ-CONR²R³, -O-(CH₂)ₚ-SO₃R², -O-(CH₂)ₚ-SO₂R², -O-(CH₂)ₚ-CN, -SH, alkylthio, haloalkylthio, cycloalkylthio, arylalkylthio, arylthio, heteroarylthio, alkylsulfonyl, haloalkylsulfonyl, cycloalkylsulfonyl, arylalkylsulfonyl, arylsulfonyl, heteroarylsulfonyl, -SO₂NH₂, -SO₂NHR², -SO₂NR²R³ , -SO₃R², aryl and heteroaryl;
   wherein p is 1, 2, 3, 4, 5, 6, 7, 8, 9 or 10;
   R² is hydrogen, alkyl, cycloalkyl, haloalkyl, arylalkyl, heteroarylalkyl, aryl or heteroaryl; and
   R³ is alkyl, cycloalkyl, haloalkyl, arylalkyl, heteroarylalkyl, aryl or heteroaryl;
   and wherein one or more pairs of suitable substituents R¹ may combine to form a ring structure together with the atoms of the ring to which they are bonded; and
R⁵ is selected from alkyl, alkenyl, alkynyl, cycloalkyl, arylalkyl, heteroarylalkyl, haloalkyl, hydroxyalkyl, alkoxyalkyl, aryloxyalkyl, heteroaryloxyalkyl, aminoalkyl, -(CH₂)ₚ-NR²R³, alkylcarbonyl, haloalkylcarbonyl, cycloalkylcarbonyl, arylalkylcarbonyl, alkenylcarbonyl, arylcarbonyl, heteroarylcarbonyl, alkoxycarbonyl, haloalkoxycarbonyl, cycloalkoxycarbonyl, arylalkoxycarbonyl, alkenyloxycarbonyl, aryloxycarbonyl, heteroaryloxycarbonyl, aryl and heteroaryl.

Preferably, the compound of formula (1c), (1d) and (1e) carries at least one substituent R¹ which is selected from hydroxy, alkoxy, haloalkoxy, cycloalkoxy, and alkenyloxy, more preferably from hydroxy and alkoxy.

As will be appreciated by the skilled reader, the deuterated or tritiated compound prepared by the method in accordance with the invention using a compound of formula (1c), (1d) or (1e) as an aromatic starting compound would be a deuterated or tritiated compound of formula (2c), (2d) or (2e), respectively:

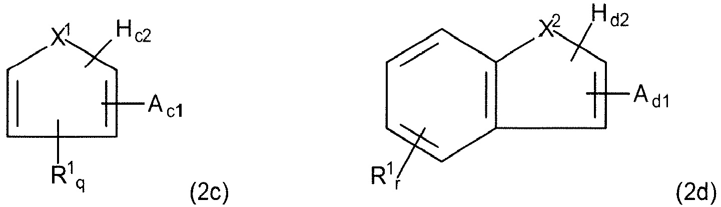

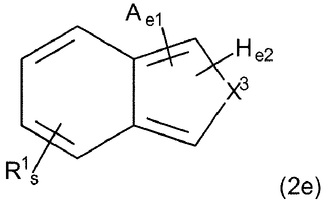

The compound of formula (2c) represents a deuterated or tritiated version of the starting compound of formula (1c), such that:
A is either deuterium or tritium, preferably deuterium;
c1 is an integer of 1 to 4, c2 is an integer of 0 to 3, and c1 + c2 corresponds to c in the selected starting compound of formula (1c);
X¹ is determined by X¹ in the selected starting compound of formula (1c); and
the optional substituent(s) R¹, their number q and their position on the aromatic ring are determined by the substituent(s) R¹, their number q and their position on the aromatic ring in the starting compound of formula (1c).

The compound of formula (2d) represents a deuterated or tritiated version of the starting compound of formula (1d), such that:
A is either deuterium or tritium, preferably deuterium;
d1 is an integer of 1 to 6, d2 is an integer of 0 to 5, and d1 + d2 corresponds to d in the selected starting compound of formula (1d);
X² is determined by X² in the selected starting compound of formula (1d); and
the optional substituent(s) R¹, their number r and their position on the aromatic ring are determined by the substituent(s) R¹, their number r and their position on the aromatic ring in the starting compound of formula (1d).

The compound of formula (2e) represents a deuterated or tritiated version of the starting compound of formula (1e), such that:
A is either deuterium or tritium, preferably deuterium;
e1 is an integer of 1 to 6, e2 is an integer of 0 to 5, and e1 + e2 corresponds to e in the selected starting compound of formula (1e);
X³ is determined by X³ in the selected starting compound of formula (1e); and
the optional substituent(s) R¹, their number r and their position on the aromatic ring are determined by the substituent(s) R¹, their number s and their position on the aromatic ring in the starting compound of formula (1e).

Also in formulae (1c) to (1e) and (2c) to (2e), the chemical bonds illustrated by the straight lines crossing a bond of the aromatic ring indicate that the concerned atom(s) or group(s) may be bonded to any one of the ring atoms of the aromatic ring or the aromatic ring system, respectively.

Preferably, at least one H atom in formula (1d) and (1e) is bonded to a carbon ring atom of the aromatic ring containing X² or X³, respectively. Likewise, it is preferred that at least one deuterium or tritium atom A atom in formula (2d) and (2e) is bonded to a carbon ring atom of the aromatic ring containing X² or X³, respectively.

In the context of the present invention, the terms used generically have the following meanings: the prefix Cₓ-C_{y} denotes the number of possible carbon atoms in each case.

The term "halogen" denotes in each case fluorine, bromine, chlorine or iodine, especially fluorine, chlorine or bromine, more preferably fluorine or chlorine.

The term "alkyl" denotes a linear or branched saturated alkyl radical, such as methyl, ethyl, propyl, 1-methylethyl (isoproyl), butyl, 1-methylpropyl (sec-butyl), 2-methylpropyl (isobutyl), 1, 1-dimethylethyl (tert-butyl), pentyl, hexyl, heptyl, octyl, 2-ethylhexyl, nonyl, decyl or 2-propylheptyl and positional isomers thereof, preferably methyl, ethyl or propyl. Preferably, the alkyl moiety comprises 1-20 carbon atoms.

The term "haloalkyl" as used herein and in the haloalkyl moieties of haloalkoxy describes straight-chain or branched saturated alkyl groups, the hydrogen atoms of these groups being partially or completely replaced by halogen atoms. Examples of these are chloromethyl, bromomethyl, dichloromethyl, trichloromethyl, fluoromethyl, difluoromethyl, trifluoromethyl, chlorofluoromethyl, dichlorofluoromethyl, chlorodifluoromethyl, 1-chloroethyl, 1-bromethyl, 1-fluoroethyl, 2-fluoroethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2 , 2,2-trichloroethyl, pentafluoroethyl, 3,3,3-trifluoroprop-1-yl, 1,1,1-trifluoroprop-2-yl, 3,3,3-trichloroprop-1-yl, heptafluoroisopropyl, 1-chlorobutyl, 2-chlorobutyl, 3-chlorobutyl, 4-chlorobutyl, 1-fluorobutyl, 2-fluorobutyl, 3-fluorobutyl, 4-fluorobutyl and the like, preferably fluoromethyl, 2-fluoroethyl or trifluoromethyl. Preferably, the haloalkyl moiety comprises 1-10 carbon atoms.

The term "alkylidene" or "alkylene" refers to alkyl radicals attached via a double bond, where the alkyl radical optionally carries 1, 2 or 3 substituents which are selected from halogen, alkyl, haloalkyl, cycloalkyl, alkoxy, haloalkoxy. Examples are methylidene (=CH₂), ethylidene (=CHCH₃), 1-propylidene (=CHCH₂ CH₃) or 2-propylidene (=C(CH₃)₂. Preferably, the alkyl radical is unsubstituted.

The term "cycloalkylidene" or "cycloalkylene" denotes cycloalkyl radicals bonded via a double bond, the cycloalkyl radical optionally carrying 1, 2 or 3 substituents which are selected from halogen, alkyl, haloalkyl, cycloalkyl, alkoxy, haloalkoxy. Examples are cyclopentylidene, cyclohexylidene or cycloheptylidene. Preferably, the cycloalkyl radical is unsubstituted.

The term "haloalkylidene" or "haloalkylene" refers to haloalkyl radicals attached via a double bond. Examples are fluoromethylene (=CHF), 2-chloroethylidene (=CH-CH₂ CI), 3-bromo-1-propylidene (=CH₂-CH₂-CH₂ Br).

The term "arylalkylidene" or "arylalkylene" denotes aryl radicals bonded via an alkylidene unit, where the aryl group optionally carries 1, 2, 3, 4 or 5 substituents which are selected from halogen, alkyl, haloalkyl, alkoxy or haloalkoxy. Examples are benzylidene (=CH-phenyl), 1-naphthylidene (=CH-naphthyl) or =CH-CH₂-phenyl.

The term "alkenyl" denotes a unsaturated linear or branched aliphatic radical having 3 to 30 carbon atoms containing one or more C-C double bonds. Examples of these are propene-1-yl, propen-2-yl (allyl), but-1-en-1-yl, but-1-en-2-yl, but-1-en-3-yl, butyne 1-en-4-yl, but-2-en-1-yl, but-2-en-2-yl, but-2-en-4-yl, 2-methylprop-1-ene-1-yl, 2-methylprop-2-en-1-yl and the like, preferably propenyl or but-1-ene-4-yl.

The term "cycloalkyl" denotes a saturated alicyclic radical of 3 to 15 carbon atoms as ring members. Examples are cyclopropyl, cyclobutyl, cyclopentyl, cyclohexyl, cycloheptyl, cyclooctyl, cyclononyl and cyclodecyl. The cycloalkyl radicals may carry 1, 2 or 3 substituents which are selected from alkyl, hydroxy, alkoxy or halogen, preferably cyclopropyl, cyclobutyl, cyclopentyl or cyclohexyl. Preferably, the cycloalkyl radical is unsubstituted.

The term "heterocycloalkyl" denotes a saturated alicyclic radical of 3 to 15 atoms as ring members, of which a maximum of three are heteroatoms independently selected from N, O and S, the remainder being carbon atoms. The heterocycloalkyl radicals may carry 1, 2 or 3 substituents which are selected from alkyl, hydroxy, alkoxy or halogen. Preferably, the cycloalkyl radical is unsubstituted.

The term "alkoxy" denotes straight-chain or branched saturated alkyl groups which are bonded via an oxygen atom, the alkyl radical optionally carrying 1, 2 or 3 substituents which are selected from halogen, alkyl, haloalkyl, cycloalkyl, alkoxy, haloalkoxy. Examples of alkoxy are methoxy, ethoxy, n-propoxy, 1-methylethoxy (isopropoxy), n-butoxy, 1-methylpropoxy (sec-butoxy), 2-methylpropoxy (isobutoxy) and 1, 1-dimethylethoxy (tert-butoxy), preferably methoxy, ethoxy, n-propoxy, or -OCH₂-cyclohexyl / -cyclopentyl. Preferably, the alkyl radical is unsubstituted. Preferably, the alkoxy moiety comprises of 1 to 20 carbon atoms.

The term "haloalkoxy" describes straight-chain or branched saturated haloalkyl groups which are bonded via an oxygen atom. Examples of these are chloromethoxy, bromomethoxy, dichloromethoxy, trichloromethoxy, fluoromethoxy, difluoromethoxy, trifluoromethoxy, chlorofluoromethoxy, dichlorofluoromethoxy, chlorodifluoromethoxy, 1-chloroethoxy, 1-bromethoxy, 1-fluoroethoxy, 2-fluoroethoxy, 2,2-difluoroethoxy, 2,2,2-trifluoroethoxy, 2-chloro-2-fluoroethoxy, 2-chloro-2,2-difluoroethoxy, 2,2-dichloro-2-fluoroethoxy, 2,2,2-trichloroethoxy, 1,1,2,2-tetrafluoroethoxy, 1-chloro-1, 2,2-trifluoroethoxy, pentafluoroethoxy, 3,3,3-trifluoroprop-1-oxy, 1, 1, 1-trifluoroprop-2-oxy, 3,3,3-trichloroprop-1-oxy, 1-chlorobutoxy, 2-chlorobutoxy, 3-chlorobutoxy, 4-chlorobutoxy, 1-fluorobutoxy, 2-fluorobutoxy, 3-fluorobutoxy, 4-fluorobutoxy and the like, preferred are fluoromethoxy, difluoromethoxy or trifluoromethoxy. Preferably, the haloalkoxy moiety comprises of 1 to 20 carbon atoms.

The term "cycloalkoxy" refers to a cycloalkyl radical of 3 to 10 carbon atoms as ring members bonded through an oxygen atom. Examples are cyclopropyloxy, cyclobutyloxy, cyclopentyloxy, cyclohexyloxy, cycloheptyloxy, cyclooctyloxy, cyclononyloxy and cyclodecyloxy. The cycloalkyl radicals can carry 1, 2 or 3 substituents, which are selected from alkyl and halogen. Preferred cycloalkoxy radicals are cyclopropyloxy, cyclobutyloxy, cyclopentyloxy or cyclohexyloxy. Preferably, the cycloalkyl radical is unsubstituted.

The term "heterocycloalkoxy" denotes a heterocycloalkyl radical as denoted above, bonded through an oxygen atom.

The term "alkenyloxy" refers to an alkenyl radical, preferably having 2 to 10 carbon atoms, bonded through an oxygen atom.

The term "alkylcarbonyl" denotes alkyl radicals having 1 to 10 carbon atoms which are bonded via a carbonyl group, the alkyl radical optionally carrying 1, 2 or 3 substituents which are selected from halogen, alkyl, haloalkyl, cycloalkyl, alkoxy, haloalkoxy. Examples thereof are methylcarbonyl (acetyl), ethylcarbonyl, propylcarbonyl, isopropylcarbonyl, n-butylcarbonyl, sec-butylcarbonyl, isobutylcarbonyl and tert-butylcarbonyl, preferably methylcarbonyl or ethylcarbonyl. Preferably, the alkyl radical is unsubstituted.

The term "haloalkylcarbonyl" denotes haloalkyl radicals having 1 to 10 carbon atoms attached via a carbonyl group. Examples of these are fluoromethylcarbonyl, difluoromethylcarbonyl, trifluoromethylcarbonyl, 1-fluoroethylcarbonyl, 2-fluoroethylcarbonyl, 1,1-difluoroethylcarbonyl, 2,2-difluoroethylcarbonyl, 2,2,2-trifluoroethylcarbonyl, pentafluoroethylcarbonyl and the like.

The term "alkylcarbonyloxy" denotes alkyl radicals having from 1 to 15 carbon atoms which are bonded via a carbonyloxy group, where the alkyl radical optionally bears 1, 2 or 3 substituents which are selected from halogen, alkyl, haloalkyl, cycloalkyl, alkoxy, haloalkoxy Examples of these are methylcarbonyloxy (Acetoxy), ethylcarbonyloxy, propylcarbonyloxy and isopropylcarbonyloxy, preferably methylcarbonyloxy or ethylcarbonyloxy, preferably the alkyl radical is unsubstituted.

The term "haloalkylcarbonyloxy" denotes haloalkyl radicals having 1 to 15 carbon atoms attached via a carbonyloxy group. Examples of these are fluoromethylcarbonyloxy, difluoromethylcarbonyloxy, trifluoromethylcarbonyloxy, 1-fluoroethylcarbonyloxy, 2-fluoroethylcarbonyloxy, 1,1-difluoroethylcarbonyloxy, 2,2-Difluoroethylcarbonyloxy, 2,2,2-trifluoroethylcarbonyloxy, pentafluoroethylcarbonyloxy and the like, preferred are fluoromethylcarbonyloxy, difluoromethylcarbonyloxy or trifluoromethylcarbonyloxy.

The term "alkenylcarbonyl" denotes alkenyl radicals having 3 to 6 carbon atoms which are bonded via a carbonyl group, the alkenyl radical optionally carrying 1, 2 or 3 substituents which are selected from halogen, alkyl, haloalkyl, cycloalkyl, alkoxy, haloalkoxy. Examples of these are propene-1-ylcarbonyl, propen-2-ylcarbonyl (allylcarbonyl), but-1-ene-1-ylcarbonyl, but-1-yn-2-ylcarbonyl, but-1-yn-3-ylcarbonyl, butyric 1-en-4-ylcarbonyl, but-2-en-1-ylcarbonyl, but-2-en-2-ylcarbonyl, but-2-en-4-ylcarbonyl, 2-methylprop-1-ene-1-ylcarbonyl, 2-methylprop-2-en-1-ylcarbonyl and the like, preferred are propene-1-ylcarbonyl, propen-2-ylcarbonyl or but-1-ene-4-ylcarbonyl. Preferably, the alkyl radical is unsubstituted.

The term "alkoxycarbonyl" denotes alkoxy radicals having 1 to 15 carbon atoms bonded via a carbonyl group, the alkyl radical optionally carrying 1, 2 or 3 substituents selected from halogen, alkyl, haloalkyl, cycloalkyl, alkoxy, haloalkoxy. Examples of these are methoxycarbonyl, ethoxycarbonyl, propoxycarbonyl, isopropoxycarbonyl, n-butoxycarbonyl, sec-butoxycarbonyl, isobutoxycarbonyl and tert-butoxycarbonyl; preference is given to methoxycarbonyl, ethoxycarbonyl, propoxycarbonyl or isopropoxycarbonyl. Preferably, the alkyl radical is unsubstituted.

The term "haloalkoxycarbonyl" denotes haloalkoxy radicals having 1 to 15 carbon atoms attached via a carbonyl group. Examples of these are fluoromethoxycarbonyl, difluoromethoxycarbonyl, trifluoromethoxycarbonyl, 1-fluoroethoxycarbonyl, 2-fluoroethoxycarbonyl, 1, 1-difluoroethoxycarbonyl, 2,2-Difluoroethoxycarbonyl, 2,2,2-trifluoroethoxycarbonyl, pentafluoroethoxycarbonyl and the like, preferred are fluoromethoxycarbonyl, difluoromethoxycarbonyl or trifluoromethoxycarbonyl.

The term "alkenyloxycarbonyl" denotes alkenyloxy radicals having 3 to 8 carbon atoms which are bonded via a carbonyl group, where the alkenyl radical optionally bears 1, 2 or 3 substituents which are selected from halogen, alkyl, haloalkyl, cycloalkyl, alkoxy, haloalkoxy. Examples of these are allyloxycarbonyl and methallyloxycarbonyl, preferably allyloxycarbonyl. Preferably, the alkenyl radical is unsubstituted.

The term "alkylsulfonyl" denotes alkyl radicals having from 1 to 15 carbon atoms bonded via a sulfonyl group (SO₂), the alkyl radical optionally carrying 1, 2 or 3 substituents selected from halogen, alkyl, haloalkyl, cycloalkyl, alkoxy, haloalkoxy. Examples thereof are methylsulfonyl, ethylsulfonyl, propylsulfonyl, isopropylsulfonyl, n-butylsulfonyl, sec-butylsulfonyl, isobutylsulfonyl and tert-butylsulfonyl. Butylsulfonyl, preferably methylsulfonyl, ethylsulfonyl, propylsulfonyl or isopropylsulfonyl. Preferably, the alkyl radical is unsubstituted.

The term "haloalkylsulfonyl" refers to haloalkyl radicals having from 1 to 15 carbon atoms which are bonded via a sulfonyl group (SO₂). Examples thereof are fluoromethylsulfonyl, difluoromethylsulfonyl, trifluoromethylsulfonyl, 1-fluoroethylsulfonyl, 2-fluoroethylsulfonyl, 1,1-difluoroethylsulfonyl, 2,2-difluoroethylsulfonyl, 2,2,2-trifluoroethylsulfonyl, pentafluoroethylsulfonyl and the like, preferably fluoromethylsulfonyl, difluoromethylsulfonyl or the like trifluoromethylsulfonyl.

The term "aryl" as used herein and for example in the arylalkyl moieties of arylalkyl refers to carbocyclic aromatic radicals having from 6 to 14 carbon atoms wherein the aryl group optionally carries 1, 2, 3, 4 or 5 substituents selected from halogen, cyano , nitro, alkyl, haloalkyl, alkoxy, alkoxycarbonyl or haloalkoxy. Examples thereof include phenyl, 4-chlorophenyl, 4-methoxyphenyl, naphthyl, fluorenyl, azulenyl, anthracenyl and phenanthrenyl. Aryl is preferably phenyl or naphthyl and preferably phenyl.

The term "heteroaryl" as used herein and for example in the heteroarylalkyl moieties of heteroarylalkyl denotes aromatic radicals having 1 to 4 heteroatoms as ring members which are selected from O, N, S and SO₂, where the heteroaryl group carries optionally 1, 2, 3 or 4 substituents which are selected from halogen, nitro, cyano, alkyl, haloalkyl, alkoxy, alkoxycarbonyl or haloalkoxy. Examples of these are 5-and 6-membered heteroaryl radicals having 1, 2, 3 or 4 heteroatoms selected from O, N, S and SO₂, such as pyrrolyl, 5-methyl-2-pyrrolyl, furanyl, 3-methyl-2-furanyl, thienyl, pyrazolyl, imidazolyl, oxazolyl, isoxazolyl, thiazolyl, isothiazolyl, triazolyl, tetrazolyl, pyridyl, pyrazinyl, pyridazinyl, pyrimidyl or triazinyl.

The term "arylcarbonyl" denotes aryl radicals which are bonded via a carbonyl group, where the aryl group optionally carries 1, 2, 3, 4 or 5 substituents which are selected from halogen, alkyl, haloalkyl, alkoxy or haloalkoxy. Examples of these are phenylcarbonyl, 4-nitrophenylcarbonyl, 2-methoxyphenylcarbonyl, 4-chlorophenylcarbonyl, 2,4-dichlorophenylcarbonyl, 4-nitrophenylcarbonyl or naphthylcarbonyl, preferably phenylcarbonyl.

The term "arylalkyl" denotes aryl radicals which are bonded via an alkyl group, where the alkyl radical optionally bears 1, 2 or 3 substituents which are selected from halogen, alkyl, haloalkyl, cycloalkyl, alkoxy, haloalkoxy and where the aryl group is optionally 1, 2, 3, 4 or 5 substituents which are selected from halogen, alkyl, haloalkyl, alkoxy or haloalkoxy. Examples of these are 4-methoxybenzyl, benzyl, 2-phenylethyl (phenethyl) and the like, preferably benzyl and phenethyl. Preferably, the alkyl radical is unsubstituted.

The term "alkylimino" refers to a radical of the formula-N = R which is bonded via the nitrogen, wherein R is alkylene, such as =CH₂, =CHCH₃, =CHCH₂ CH₃, =C(CH₃)₂, =CHCH₂CH₂CH₃, =C(CH₃) CH₂CH₃ or =CHCH(CH₃)₂. The alkylene radical of "alkylimino" optionally bears 1, 2 or 3 substituents selected from halogen, alkyl, haloalkyl, cycloalkyl, alkoxy, haloalkoxy. Preferably, the alkylene radical is unsubstituted.

The term "arylalkylimino" refers to a radical of the formula-N = R which is bonded via the nitrogen, where R is arylalkylene, such as benzylidene (R = CH-phenyl). The aryl group in "arylalkylimino" may optionally bear 1, 2, 3, 4 or 5 substituents selected from halogen, alkyl, haloalkyl, alkoxy or haloalkoxy.

The term "hydroxyalkyl" denotes a hydroxy group bonded via an alkyl group, the alkyl group optionally carrying 1, 2 or 3 substituents selected from halogen, alkyl, haloalkyl, cycloalkyl, alkoxy, haloalkoxy. Examples are -CH₂OH, -(CH₂)₂OH or -(CH₂)₃OH. Preferably, the alkyl radical is unsubstituted.

The term "alkynyl" refers to an unsaturated, linear or branched aliphatic radical of 3 to 15 carbon atoms containing at least one carbon-carbon triple bond. Examples of these are propin-3-yl, but-1-yn-1-yl, but-1-yn-3-yl, but-1-yn-4-yl, but-2-yn-1-yl, but 2-yn-4-yl and the like, preferably propyn-3-yl or but-1-yn-4-yl.

The term "heteroarylalkyl" denotes heteroaryl radicals which are bonded via an alkyl group, the alkyl radical optionally carrying 1, 2 or 3 substituents which are selected from halogen, alkyl, haloalkyl, cycloalkyl, alkoxy, haloalkoxy, and where the heteroaryl group carries optionally 1, 2, 3 or 4 substituents which are selected from halogen, alkyl, haloalkyl, alkoxy or haloalkoxy. Examples of these are 4-pyridylmethyl, 1-(4-pyridyl) ethyl, 2-(4-pyridyl) ethyl, 2-furanylmethyl, 1-(2-furanyl) ethyl, 2-(2-furanyl) ethyl and the like, preferably 4-pyridylmethyl. Preferably, the alkyl radical is unsubstituted.

The term "alkoxyalkyl" denotes alkoxy radicals having 1 to 10 carbon atoms bonded via an alkyl group, the alkyl radicals optionally carrying 1, 2 or 3 substituents which are selected from halogen, alkyl, haloalkyl, cycloalkyl, alkoxy, haloalkoxy. Examples of these are methoxymethyl, ethoxymethyl, n-propoxymethyl, isopropoxymethyl, n-butoxymethyl, sec-butoxymethyl, isobutoxymethyl, tert-butoxymethyl, methoxyethyl, ethoxyethyl, propoxyethyl, isopropoxyethyl, n-butoxyethyl, sec-butoxyethyl, isobutoxyethyl, tert-butoxyethyl and the like preferred are methoxymethyl, ethoxymethyl, n-propoxymethyl, isopropoxymethyl, methoxyethyl, ethoxyethyl, propoxyethyl or isopropoxyethyl. Preferably, the alkyl radical is unsubstituted.

The term "aryloxyalkyl" denotes aryloxy radicals having 6 to 14 carbon atoms which are bonded via an alkyl group, the alkyl radical optionally carrying 1, 2 or 3 substituents which are selected from halogen, alkyl, haloalkyl, cycloalkyl, alkoxy, haloalkoxy. The aryl group in "aryloxyalkyl" optionally carries 1, 2, 3, 4 or 5 substituents which are selected from halogen, alkyl, haloalkyl, alkoxy or haloalkoxy. Examples of these are phenoxymethyl, phenoxyethyl, phenoxypropyl, phenoxybutyl, 1-naphthyloxymethyl, 1-(1-naphthyloxy) ethyl, 2-(1-naphthyloxy) ethyl, 1-(1-naphthyloxy) propyl, 2-(1-naphthyloxy) propyl, 3-(1-naphthyloxy) propyl and the like are preferred, phenoxymethyl and phenoxyethyl. Preferably, the alkyl radical is unsubstituted.

The term "heteroaryloxyalkyl" denotes heteroaryloxy radicals having from 1 to 4 heteroatoms bonded via an alkyl group as ring members selected from O, N, S and SO₂, the alkyl radical optionally carrying 1, 2 or 3 substituents selected from halogen , Alkyl, haloalkyl, cycloalkyl, alkoxy, haloalkoxy. The heteroaryl group in "heteroaryloxyalkyl" optionally carries 1, 2, 3 or 4 substituents which are selected from halogen, alkyl, haloalkyl, alkoxy or haloalkoxy. Examples of these are 4-pyridyloxymethyl, 1-(4-pyridyloxy) ethyl, 2-(4-pyridyloxy) ethyl, 1-(4-pyridyloxy) propyl, 2-(4-pyridyloxy) propyl, 3-(4-pyridyloxy) propyl, 2-furanyloxymethyl, 1-(2-furanyloxy) ethyl, 2-(2-furanyloxy) ethyl, 1-(2-furanyloxy) propyl, 2-(2-furanyloxy) propyl, 3-(2-furanyloxy) propyl and the like, preferred are 4-pyridyloxymethyl or 1-(4-pyridyloxy) ethyl. Preferably, the alkyl radical is unsubstituted.

The term "aminoalkyl" denotes an NH₂ radical bonded via an alkyl group, the alkyl group optionally carrying 1, 2 or 3 substituents which are selected from halogen, alkyl, haloalkyl, cycloalkyl, alkoxy, haloalkoxy Examples of these are aminomethyl [-CH₂NH₂], aminoethyl [-(CH₂)₂NH₂] and the like, preferred are-CH₂NH₂ ,-(CH₂)₂NH₂ or-(CH₂)₃NH₂ Preferably, the alkyl radical is unsubstituted.

The term "alkylaminoalkyl" denotes an - NHR² or -NR²R³ radical attached via an alkyl group, wherein R² and R³ are as defined above. Examples are methylaminomethyl [-CH₂-NH-CH₃], N,N-dimethylaminomethyl [-CH₂-N(CH₃)₂], N,N-dimethylaminoethyl [-(CH₃)₂], alkyl, haloalkyl, cycloalkyl, alkoxy and the like, preferably -CH₂-N(CH₃)₂ or -(CH₂)₂-N(CH₃)₂. Preferably, the alkyl group is unsubstituted.

The term "cycloalkylcarbonyl" denotes cycloalkyl radicals having 3 to 15 carbon atoms bonded via a carbonyl group as ring members, the cycloalkyl radical optionally carrying 1, 2 or 3 substituents selected from halogen, alkyl, haloalkyl, cycloalkyl, alkoxy, haloalkoxy. Examples thereof are cyclopropylcarbonyl, cyclobutylcarbonyl, cyclopentylcarbonyl, cyclohexylcarbonyl and the like, preferably cyclopropylcarbonyl, cyclopentylcarbonyl or cyclohexylcarbonyl. Preferably, the cycloalkyl radical is unsubstituted.

The term "arylalkylcarbonyl" denotes an alkyl radicals attached via a carbonyl group, the alkyl radical optionally carrying 1, 2 or 3 substituents which are selected from halogen, alkyl, haloalkyl, cycloalkyl, alkoxy, haloalkoxy and where the aryl group is optionally 1, 2 , 3, 4 or 5 substituents selected from halogen, alkyl, haloalkyl, alkoxy or haloalkoxy. Examples of these are benzylcarbonyl, 2-phenylethylcarbonyl and the like, preferably benzylcarbonyl or 2-phenylethylcarbonyl. Preferably, the alkyl radical is unsubstituted.

The term "heteroarylalkylcarbonyl" denotes heteroarylalkyl radicals having 1 to 4 heteroatoms bonded via a carbonyl group and being ring members selected from O, N, S and SO₂ , the alkyl radical optionally bearing 1, 2 or 3 substituents selected from halogen, alkyl, haloalkyl, cycloalkyl, alkoxy, haloalkoxy, and wherein the heteroaryl group optionally carries 1, 2, 3 or 4 substituents selected from halogen, alkyl, haloalkyl, alkoxy or haloalkoxy. Examples of these are 4-pyridylmethylcarbonyl, 1-(4-pyridyl) ethylcarbonyl, 2-furanylmethylcarbonyl, 1-(2-furanyl) ethylcarbonyl and the like, preferably 4-pyridylmethylcarbonyl. Preferably, the alkyl radical is unsubstituted.

The term "cycloalkoxycarbonyl" denotes cycloalkoxy radicals having 3 to 15 carbon atoms attached via a carbonyl group as ring members, the cycloalkyl radical optionally bearing 1, 2 or 3 substituents selected from halogen, alkyl, haloalkyl, cycloalkyl, alkoxy, haloalkoxy. Examples of these are cyclopropyloxycarbonyl, cyclobutyloxycarbonyl, cyclopentyloxycarbonyl, cyclohexyloxycarbonyl, cycloheptyloxycarbonyl, cyclooctyloxycarbonyl, cyclononyloxycarbonyl and the like, preferred are cyclopropyloxycarbonyl, cyclopentyloxycarbonyl or cyclohexyloxycarbonyl. Preferably, the cycloalkyl radical is unsubstituted.

The term "arylalkoxycarbonyl" denotes alkyl groups having 6 to 14 carbon atoms bonded via a carbonyl group, the alkoxy radical optionally carrying 1, 2 or 3 substituents selected from halogen, alkyl, haloalkyl, cycloalkyl, alkoxy, haloalkoxy and the aryl optionally carries 1, 2, 3 or 4 substituents selected from halogen, alkyl, haloalkyl, alkoxy or haloalkoxy. Examples of these are benzyloxycarbonyl, 2-phenylethyloxycarbonyl and the like, preferred is benzyloxycarbonyl. Preferably, the alkoxyl radical is unsubstituted.

The term "aryloxy" denotes an aryl radical which is bonded via an oxygen atom, where the aryl group optionally carries 1, 2, 3, 4 or 5 substituents which are selected from halogen, alkyl, haloalkyl, alkoxy or haloalkoxy. Examples of these are phenyloxy (phenoxy), naphthyloxy, fluorenyloxy and the like, phenoxy is preferred.

The term "aryloxycarbonyl" denotes aryloxy radicals having 6 to 14 carbon atoms bonded via a carbonyl group, the aryl group optionally carrying 1, 2, 3 or 4 substituents selected from halogen, alkyl, haloalkyl, alkoxy or haloalkoxy. Examples of these are phenyloxycarbonyl (phenoxycarbonyl), naphthyloxycarbonyl, fluorenyloxycarbonyl and the like, phenoxycarbonyl being preferred.

The term "heteroaryloxy" denotes heteroaryl radicals bonded via an oxygen atom and having 1 to 4 heteroatoms as ring members which are selected from O, N, S and SO₂, where the heteroaryl group optionally carries 1, 2, 3 or 4 substituents which are selected under halogen, alkyl, haloalkyl, alkoxy or haloalkoxy. Examples of these are pyrrolyloxy, furanyloxy, thienyloxy, pyrazolyloxy, imidazolyloxy, oxazolyloxy, thiazolyloxy, pyridyloxy, pyrazinyloxy, pyridazinyloxy, pyrimidyloxy and the like, preferably pyrazolyloxy or pyridyloxy.

The term "heteroaryloxycarbonyl" denotes heteroaryloxy radicals bonded via a carbonyl group and having 1 to 4 heteroatoms as ring members which are selected from O, N, S and SO₂, where the heteroaryl group optionally bears 1, 2, 3 or 4 substituents which are selected under halogen, alkyl, haloalkyl, alkoxy or haloalkoxy. Examples of these are pyrrolyloxycarbonyl, furanyloxycarbonyl, thienyloxycarbonyl, pyrazolyloxycarbonyl, imidazolyloxycarbonyl, oxazolyloxycarbonyl, thiazolyloxycarbonyl, pyridyloxycarbonyl, pyrazinyloxycarbonyl, pyridazinyl oxycarbonyl, pyrimidyloxycarbonyl and the like, preferably imidazolyloxycarbonyl or oxazolyloxycarbonyl.

The term "arylalkyloxy" denotes arylalkyl radicals bonded via an oxygen atom, where the alkyl radical optionally bears 1, 2 or 3 substituents which are selected from halogen, alkyl, haloalkyl, cycloalkyl, alkoxy, haloalkoxy and where the aryl group is optionally 1 , 2, 3 or 4 substituents selected from halogen, alkyl, haloalkyl, alkoxy or haloalkoxy. Examples of these are benzyloxy, 2-phenylethyloxy(phenethyloxy) and the like, preferred is benzyloxy. Preferably, the alkyl radical is unsubstituted.

The term "cycloalkylimino" denotes a radical of the formula -N=R which is bonded via the nitrogen, in which R represents cycloalkylidene radicals which optionally carry 1, 2 or 3 substituents which are selected from halogen, alkyl, haloalkyl, cycloalkylidene radicals loalkyl, alkoxy, haloalkoxy. Examples of R are cyclopentylidene, cyclohexylidene, cycloheptylidene and the like. Preferably, the cycloalkylidene radical is unsubstituted.

The term "haloalkylimino" denotes a radical of the formula -N=R which is bonded via the nitrogen, where R represents haloalkylidene radicals, the hydrogen atoms of these straight-chain or branched alkylene groups being partly or completely replaced by halogen atoms. Examples of R are chloromethylene, bromomethylene, dichloromethylene, fluoromethylene, difluoromethylene, chlorofluoromethylene, 1-chloroethylene, 1-bromoethylene, 1-fluoroethylene, 2-fluoroethylene, 2,2-difluoroethylene, 2,2,2-trifluoroethylene, 2-chloro-2-fluoroethylene, 2-chloro-2,2-difluoroethylene, 2,2-dichloro-2-fluoroethylene, 2,2,2-trichlorethylene and the like.

The term "cycloalkylcarbonyloxy" denotes cycloalkyl radicals having 3 to 10 carbon atoms bonded via a carbonyloxy group and being ring members, the cycloalkyl radical optionally carrying 1, 2 or 3 substituents which are selected from halogen, alkyl, haloalkyl, cycloalkyl, alkoxy, haloalkoxy. Examples of these are cyclophenylcarbonyloxy, cyclobutylcarbonyloxy, cyclopentylcarbonyloxy, cyclohexylcarbonyloxy, cycloheptylcarbonyloxy, cyclooctylcarbonyloxy, cyclononylcarbonyloxy and the like, preferably cyclopentylcarbonyloxy or cyclohexylcarbonyloxy. Preferably, the cycloalkyl radical is unsubstituted.

The term "arylalkylcarbonyloxy" denotes arylalkyl radicals bonded via a carbonyloxy group, the alkyl radical optionally carrying 1, 2 or 3 substituents selected from halogen, alkyl, haloalkyl, cycloalkyl, alkoxy, haloalkoxy, and wherein the aryl group is optionally 1, 2, 3 or 4 substituents which are selected from halogen, alkyl, haloalkyl, alkoxy or haloalkoxy examples of which are benzylcarbonyloxy, 2-phenylethylcarbonyloxy (phenethylcarbonyloxy) and the like, preferably benzylcarbonyloxy, preferably the alkyl radical is unsubstituted a carbonyl-bonded aryl groups, wherein the aryl group optionally carries 1, 2, 3 or 4 substituents selected from halogen, alkyl, haloalkyl, alkoxy or haloalkoxy. Examples of these are phenylcarbonyloxy, naphthylcarbonyloxy, fluorenylcarbonyloxy, anthracenylcarbonyloxy and the like, preferably phenylcarbonyloxy.

The term "heteroarylcarbonyloxy" denotes via a carbonyloxy group bonded heteroaryl radicals having 1 to 4 heteroatoms as ring members, which are selected from O, N, S and SO₂, wherein the heteroaryl group optionally carries 1, 2, 3 or 4 substituents selected from halogen Examples include 2-pyrrolylcarbonyloxy, 2-furanylcarbonyloxy, 2-thienylcarbonyloxy, 3-pyrazolylcarbonyloxy, 2-imidazolylcarbonyloxy, 2-oxazolylcarbonyloxy, 2-thiazolylcarbonyloxy, 4-triazolylcarbonyloxy, 4-pyridylcarbonyloxy, and the like. The term "heteroarylcarbonyl" denotes heteroaryl radicals having 1 to 4 heteroatoms bonded via a carbonyl group and ring members selected from O, N, S and SO₂, the heteroaryl group optionally carrying 1, 2, 3 or 4 substituents selected from halogen, Alkyl, haloalkyl, alkoxy or haloalkoxy. Examples of these are 2-pyrrolylcarbonyl, 2-furanylcarbonyl, 2-thienylcarbonyl, 3-pyrazolylcarbonyl, 2-imidazolylcarbonyl, 2-oxazolylcarbonyl, 2-thiazolylcarbonyl, 4-triazolylcarbonyl, 4-pyridylcarbonyl and the like.

The term "alkylthio" denotes alkyl radicals which are bonded via a sulfur atom, where the alkyl radical optionally bears 1, 2 or 3 substituents which have been are selected from halogen, alkyl, haloalkyl, cycloalkyl, alkoxy, haloalkoxy. Examples of these are methylthio, ethylthio, n-propylthio, 1-methylethylthio (isopropylthio), n-butylthio, 1-methylpropylthio (sec-butylthio), 2-methylpropylthio (isobutylthio) and 1,1-dimethylethylthio (tert-butylthio) and the same, preferably methylthio, ethylthio or n-propylthio. Preferably, the alkyl radical is unsubstituted.

The term "haloalkylthio" describes haloalkyl groups which are bonded via a sulfur atom. Examples thereof are chloromethylthio, bromomethylthio, dichloromethylthio, trichloromethylthio, fluoromethylthio, difluoromethylthio, trifluoromethylthio, chlorofluoromethylthio, dichlorofluoromethylthio, chlorodifluoromethylthio, 1-chloroethylthio, 1-bromoethylthio, 1-fluoroethylthio, 2-fluoroethylthio, 2,2-difluoroethylthio, 2,2,2-trifluoroethylthio, 2-chloro-2-fluoroethylthio, 2-chloro-2,2-difluoroethylthio, 2,2-dichloro-2-fluoroethylthio, 2,2,2-trichloroethylthio, 1,1,2,2-tetrafluoroethylthio, 1-chloro-1, 2,2-trifluoroethylthio, pentafluoroethylthio, 3,3,3-trifluoroprop-1-ylthio, 1,1,1-trifluoroprop-2-ylthio, 3,3,3-trichloroprop-1-ylthio, 1-chlorobutylthio, 2-chlorobutylthio, 3-chlorobutylthio, 4-chlorobutylthio, 1-fluorobutylthio, 2-fluorobutylthio, 3-fluorobutylthio, 4-fluorobutylthio and the like, preferred are fluoromethylthio, 2-fluoroethylthio or trifluoromethylthio.

The term "cycloalkylthio" denotes cycloalkyl radicals which are bonded via a sulfur atom. Examples are cyclopropylthio, cyclobutylthio, cyclopentylthio, cyclohexylthio, cycloheptylthio, cyclooctylthio, cyclononylthio and cyclodecylthio. The cycloalkyl radicals can carry 1, 2 or 3 substituents which are selected from alkyl and halogen. Preferred cycloalkylthio radicals are cyclopentylthio or cyclohexylthio. Preferably, the cycloalkyl radical is unsubstituted.

The term "arylthio" denotes aryl radicals which are bonded via a sulfur atom, where the aryl group optionally carries 1, 2, 3 or 4 substituents which are selected from halogen, alkyl, haloalkyl, alkoxy or haloalkoxy. Examples of these are phenylthio, naphthylthio, fluorenylthio and the like, preferably phenylthio.

The term "heteroarylthio" denotes heteroaryl radicals bonded via a sulfur atom having 1 to 4 heteroatoms as ring members which are selected from O, N, S and SO₂, where the heteroaryl group optionally carries 1, 2, 3 or 4 substituents which are selected under halogen, alkyl, haloalkyl, alkoxy or haloalkoxy. Examples of these are 2-pyrrolylthio, 3-furanylthio, 3-thienylthio, 2-pyridylthio and the like, preferably 2-pyridylthio or 4-pyridylthio.

The term "arylalkylthio" denotes arylalkyl radicals bonded via a sulfur atom, the alkyl radical optionally carrying 1, 2 or 3 substituents which are selected from halogen, alkyl, haloalkyl, cycloalkyl, alkoxy, haloalkoxy and where the aryl group is optionally 1, 2 , 3 or 4 substituents selected from halogen, alkyl, haloalkyl, alkoxy or haloalkoxy. Examples of these are benzylthio, 2-phenylethylthio and the like, preferably benzylthio. Preferably, the alkyl radical is unsubstituted.

The term "cycloalkylsulfonyl" denotes via a sulfonyl group (SO₂) bonded cycloalkyl radicals having 3 to 10 carbon atoms as ring members, where the cycloalkyl radical optionally bears 1, 2 or 3 substituents which are selected from halogen, alkyl, haloalkyl, cycloalkyl, alkoxy, haloalkoxy. Examples of these are cyclopropylsulfonyl, cyclobutylsulfonyl, cyclopentylsulfonyl, cyclohexylsulfonyl and the like, preferably cyclopropylsulfonyl, cyclopentylsulfonyl or cyclohexylsulfonyl. Preferably, the cycloalkyl radical is unsubstituted.

The term "arylsulfonyl" denotes aryl radicals bonded via a sulfonyl group (SO₂), where the aryl group optionally carries 1, 2, 3 or 4 substituents which are selected from halogen, alkyl, haloalkyl, alkoxy or haloalkoxy. Examples of these are phenylsulfonyl, naphthylsulfonyl, fluorenylsulfonyl and the like, preferably phenylsulfonyl.

The term "heteroarylsulfonyl" denotes heteroaryl radicals having from 1 to 4 heteroatoms bonded via a sulfonyl group (SO 2) as ring members selected from among O, N, S and SO₂, the heteroaryl group optionally carrying 1, 2, 3 or 4 substituents selected are halogen, alkyl, haloalkyl, alkoxy or haloalkoxy. Examples of these are 2-pyrrolylsulfonyl, 2-furanylsulfonyl, 2-thienylsulfonyl, 3-pyrazolylsulfonyl, 2-imidazolylsulfonyl, 2-oxazolylsulfonyl, 4-pyridylsulfonyl and the like, 2-pyrrolylsulfonyl, 2-furanylsulfonyl or 4-pyridylsulfonyl.

The term "arylalkylsulfonyl" denotes arylalkyl radicals bonded via a sulfonyl group (SO₂), the alkyl radical optionally carrying 1, 2 or 3 substituents which are selected from halogen, alkyl, haloalkyl, cycloalkyl, alkoxy, haloalkoxy and where the aryl group is optionally 1, 2, 3 or 4 substituents which are selected from halogen, alkyl, haloalkyl, alkoxy or haloalkoxy. Examples of these are benzylsulfonyl, 2-phenylethylsulfonyl and the like, preferably benzylsulfonyl. Preferably, the alkyl radical is unsubstituted.

In the context of the method of the present invention, a liquid composition is provided wherein the aromatic starting compound is dissolved or dispersed in a deuterated or tritiated solvent which is not water, or in a solvent system comprising at least one deuterated or tritiated solvent which is not water. As will be appreciated, at least one deuterated solvent will be used to provide a deuterated compound group carrying at least one deuterium atom directly bonded to a carbon ring atom of an aromatic ring, or at least one tritiated solvent will be used to provide a tritiated compound group carrying at least one tritium atom directly bonded to a carbon ring atom of an aromatic ring. Combinations of deuterated or tritiated solvents can be used, but typically either at least one deuterated solvent is used, or at least one tritiated compound is used, and not a combination of both.

The term "solvent" refers in the broadest sense to substances which can wholly or partially dissolve other substances by physical means, in the narrower sense inorganic or organic liquids which are able to dissolve other gaseous, liquid or solid substances.

The term "solvent system" refers to a mixture of at least two, such as two or three, solvents.

For example, protic aprotic, amphiprotic, protogenic, or protophilic solvents are known.

Exemplary solvents include alcohols (e.g. methanol, ethanol, etc.), glycols (e.g. ethylene glycol), ethers, and glycol ethers (e.g. diethyl ether, dioxane, tetrahydrofuran), ketones (e.g. acetone), amides, nitriles and other nitrogen compounds (e.g. dimethylformamide, acetonitrile), sulfur compounds (e.g. carbon disulfide, sulfolane), nitro compounds (e.g. nitromethane), halogenated hydrocarbons (e.g. dichloromethane, chloroform), and hydrocarbons (e.g. gasolines, petroleum ether, cyclohexane).

Solvents or solvent systems suitable for use in the method of the present invention are preferably selected with a view to the particular reaction conditions for the conversion of the aromatic starting compound. However, it is generally advantageous to use as solvent or solvent system for the method in which the aromatic starting compound has a good solubility. Good solubility is understood to mean that the aromatic starting compound is ideally completely dissolved in a suitable amount of solvent. Preferably, a solvent or solvent system is used wherein the aromatic starting compound has a solubility of at least 1 mg/mL under the reaction conditions applied in the method.

In the method of the present invention it is not necessary that the aromatic starting compound is completely soluble in the chosen solvent or solvent system. However, it has proven to be advantageous if both the aromatic starting compound and the prepared deuterated or tritiated compound and the used acid(s) are completely soluble in the chosen solvent or solvent system.

Preferably, the solvent(s) are commercially available and directly used. The solvent(s) may also be modified before use by e.g. drying, distillation. Other methods known to the person skilled in the art may also be applied.

The liquid composition provided in the context of the method in accordance with the present invention comprises at least one deuterated or tritiated solvent other than water as a single solvent or as a component of a solvent system.

In line with the above definiton, a deuterated solvent is a solvent in which deuterium ("D") is present in at least one position at an abundance level which is higher than the natural abundance level of deuterium, typically at least 100 times higher than the natural abundance level. In this context, reliance is put herein on the natural abundance level of 0.015 mol%, reflecting the approximate abundance of deuterium in seawater, as a reference value. Thus, in a deuterated solvent, deuterium is typically present in at least one position at a ratio of the number of deuterium atoms to the sum of the number of deuterium atoms plus hydrogen atoms, indicated a percentage, of 1.5 %. This ratio can be measured by determining the the number of deuterium atoms in a sample of the solvent at a defined position, and divding it by the determined number of deuterium and hydrogen atoms at the same position in the total number of molecules of the solvent, e.g. via NMR spectroscopy. Preferably, the deuterium incorporation in the deuterated solvent is above 90 % in at least one position. Most preferably the deuterium incorporation is above 99 % in at least one position.

Similarly, a tritiated solvent is a solvent in which tritium ("T") is present in at least one position at a significant abundance level, e.g. at least 1.5 %. Thus, in a tritiated solvent, tritium is typically present in at least one position at a ratio of the number of tritium atoms to the sum of the number of tritium atoms plus hydrogen atoms, indicated a percentage, of 1.5 %. This ratio can be measured by determining the number of tritium atoms at a defined position in a sample of the solvent, and dividing it by the determined number of tritium and hydrogen atom at the same position in the total number of molecules of the solvent, e.g. via NMR spectroscopy. Preferably, the tritium incorporation in the tritiated solvent is above 90 mol% in at least one position. Most preferably the tritium incorporation is above 99 mol% in at least one position.

If a single solvent is used to provide the liquid composition comprising the dissolved or dispersed aromatic starting compound, the solvent is the deuterated or tritiated solvent. If a solvent system is used, for example a deuterated or tritiated solvent may be used in admixture with at least one further deuterated or tritiated solvent, a deuterated or tritiated solvent may be used in admixture with at least one solvent which is neither deuterated nor tritiated, or two or more deuterated or tritiated solvents may be used in admixture together with one or more solvents which are neither deuterated nor tritiated. Also, a solvent system may be used wherein a deuterated or tritiated solvent is used in admixture with a non-deuterated/non-tritiated version thereof, such as H₃COD and H₃COH.

For example, in a solvent system, a second solvent may be present to improve the solubility or dispersibility of the aromatic starting compound (also referred to as a co-solvent), as long as the solvent does not adversely affect the deuteration or tritiation of the aromatic starting compound.

The term "co-solvent" refers to an additional solvent, where solvent is defined as above. A co-solvent may be useful to enhance the solubility of the aromatic compound. The co-solvent may be a deuterated or tritiated solvent, or a non-deuterated and non-tritiated solvent.

The volume fraction of the deuterated or tritiated solvent or solvents other than water in the liquid composition wherein the starting compound is dissolved or dispersed may be between 0.1% and 100% vol/vol, based on the total volume of solvents (and typically indicated for a temperature of 25°C) in the liquid composition. Preferably it is above 25% vol/vol.

In order to allow the deuteration to proceed efficiently, and without the need for repetitions, the molar amount of deuterated or tritiated solvent contained in the liquid composition is typically such that the molar amount of deuterium or tritium atoms provided by the deuterated or tritiated solvent for the transfer to the aromatic starting compound is at least equivalent to the molar amount of hydrogen atoms to be replaced in the starting compound. As will be understood by the skilled person, the molar amount of hydrogen atoms to be replaced can be conveniently determined from the molar amount of the starting compound and the number of positions where the deuterium or tritum atom should be introduced into the starting compound. Preferably, an excess of deuterated solvent is used, such that the molar amount of deuterium or tritium atoms provided by the deuterated or tritiated solvent for the transfer to the aromatic starting compound is higher than the molar amount of hydrogen atoms to be replaced in the starting compound, e.g. with a ratio of at least 10:1 of the molar amounts, more preferably of at least 20:1 and still more preferably of at least 50:1.

Water may be contained in the liquid composition in addition to a deuterated or tritiated solvent which is not water, but the water is preferably absent or contained only in small amounts, e.g. not more than 10 % vol/vol, preferably not more than 5 % vol/vol, and still more preferably not more than 1 % vol/vol based on the total volume of solvents (and typically indicated for a temperature of 25°C) in the liquid composition.

The concentration of the aromatic starting compound in the composition wherein the aromatic starting compound is dissolved or dispersed in a deuterated or tritiated solvent or in a solvent system comprising at least one deuterated or tritiated solvent is generally between 0.0001 M and 5 M in terms of the molar concentration of the aromatic starting compound, indicated as the number of moles of the starting compound per volume of the solvent or the solvent system (typically indicated for a temperature of 25 °C). Preferably, it is between 0.0005 M and 1 M. Most preferably, it is between 0.001 M and 0.11 M.

In the method of the present invention, a preferred deuterated or tritiated solvent that can be used as a single solvent or as a component of the solvent system comprising at least one deuterated or tritiated solvent to provide the liquid composition wherein the aromatic starting compound is dissolved or dispersed, is a deuterated or tritiated organic solvent selected from the following classes of solvents:
s1) an aliphatic alcohol comprising a deuterated or tritiated alcoholic hydroxyl group;
s2) an aromatic or heteroaromatic alcohol comprising a deuterated or tritiated alcoholic hydroxyl group;
s3) a compound comprising a carbonyl group and a deuterium or tritium atom bonded to a carbon atom or a heteroatom in alpha-position to the carbonyl group;
s4) a nitroalkane comprising a deuterium or tritium atom bonded to a carbon atom in alpha position to the nitro group;
s5) a carboxylic acid which comprises a deuterated or tritiated -C(O)OH group;
s6) an amide which comprises a deuterated or tritiated -C(O)NH- group;
s7) an oxime or a hydroximic acid which comprises a deuterated or tritiated =N-OH group;
s8) a peroxide which comprises a deuterated or tritiated -OOH group.

The aliphatic alcohol s1) comprising a deuterated or tritiated alcoholic hydroxyl group may be a monohydric or a polyhydric alcohol. In a polyhydric alcohol, one or more deuterated or tritiated alcoholic hydroxyl group(s) may be present. Furthermore, the deuterated aliphatic alcohol may carry additional deuterium atoms or tritium atoms in other positions than in the alcohol hydroxyl group(s). Examples are alkyl alcohols, such as methanol, ethanol, isopropanol and n-propanol, glycol, glycerol, glucose and substituted versions of these.

The aromatic or heteroaromatic alcohol s2) comprising a deuterated or tritiated alcoholic hydroxyl group may be a monohydric or a polyhydric alcohol. In a polyhydric alcohol, one or more deuterated or tritiated alcoholic hydroxyl group(s) may be present. Furthermore, the aromatic alcohol may carry additional deuterium or tritium atoms in other positions than in the alcohol hydroxyl group(s). Examples are phenol, naphthol, 3-hydroxypyrrole and substituted versions thereof.

The compound s3) comprising a carbonyl group and a deuterium or tritium atom bonded to a carbon atom or a heteroatom in alpha-position to the carbonyl group may comprise one or more deuterium or tritium atoms bonded to a carbon atom or a heteroatom in alpha-position to the carbonyl group. Furthermore, it may carry additional deuterium or tritium atoms in other positions. Examples are ketones (e.g. acetone, acetophenone), aldehydes (e.g. acetaldehyde), esters (e.g. ethyl acetate, gamma-butyrolactone), amides (e.g. formamide), ureas (e.g. urea), and carboxylic acids (e.g. acetic acid, formic acid, benzoic acid, or fatty acids).

The nitroalkane s4) comprising a deuterium or tritium atom bonded to a carbon atom in alpha position to the nitro group may carry additional deuterium or tritium atoms in other positions. Preferred as a nitroalkane is deuterated or tritiated nitromethane, which may comprise one, two or three tritium or deuterium atoms.

Likewise, the carboxylic acid s5) which comprises a deuterated or tritiated -C(O)OH group, the amide s6) which comprises a deuterated or tritiated -C(O)NH- group, the oxime or hydroximic acid s7) which comprise a deuterated or tritiated =N-OH group and the peroxide s8) which comprises a deuterated or tritiated -OOH group may carry additional deuterium or tritium atoms in other positions. In line with the above, examples of suitable carboxylic acids are acetic acid, formic acid, benzoic acid, or fatty acids).

In a preferred liquid composition comprising a preferred deuterated or tritiated solvent selected from s1) to s8), the deuterated or tritiated solvent can be used as a single solvent, or as a component of a solvent system comprising at least one deuterated or tritiated solvent which is not water. Such a solvent system may combine two or more of the preferred deuterated or trititated solvents selected from s1) to s8), or it may combine one of the preferred deuterated or tritiated solvents selected from s1) to s8) with one or more other deuterated or tritiated solvent(s), and/or with one or more non-deuterated and non-tritiated solvent(s).

In the preferred liquid composition, the amount of the deuterated or tritiated solvent is typically such that the molar amount of deuterium or tritium atoms provided by one or more of a deuterated or tritiated alcoholic hydroxyl group of the solvent s1), a deuterated or tritiated alcoholic hydroxyl group of the solvent s2), a deuterium or tritium atom bonded to a carbon atom or a heteroatom in alpha-position to the carbonyl group of the solvent s3), a deuterium or tritium atom bonded to a carbon atom in alpha position to the nitro group of the solvent s4), a deuterated or tritiated -C(O)OH group of the solvent s5), a deuterated or tritiated -C(O)NH- group of the solvent s6), a deuterated or tritiated =N-OH group of the solvent s7), and a deuterated or tritiated -OOH group of the solvent s8),
is at least equivalent to the molar amount of hydrogen atoms to be replaced in the aromatic starting compound. As noted above, the molar amount of hydrogen atoms to be replaced can be conveniently determined from the molar amount of the starting compound and the number of positions where the deuterium or tritum atom should be introduced into the starting compound. Preferably, an excess of deuterated solvent is used, such that the molar amount of the deuterium or tritium atoms as referred to above is higher than the molar amount of hydrogen atoms to be replaced in the starting compound, e.g. with a ratio of at least 10:1 of the molar amounts, more preferably of at least 20:1, and still more preferably of at least 50:1.

Among the preferred deuterated or tritiated solvents selected from s1) to s8), the alcohols s1) and s2) and the carboxylic acids s5) are more preferred, and the aliphatic alcohols s1) are still more preferred. Particular preference is given to among the alcohols s1) to deuterated or trititated monohydric alkyl alkohols, e.g. C1 to C4 alkyl alcohols, such as methanol comprising a deuterated or tritiated hydroxy group, or ethanol comprising a deuterated or tritiated hydroxy group.

Examples of preferred deuterated or tritiated solvents for use as a solvent or in a solvent system are n-butanol-d₁₀, t-butanol-d₁₀, cylohexanol-d12, ethyl alcohol-d6, ethyl alcohol-OD, ethylene glycol-d6, ethylene glycol-(OD)2, 1,2-propane(diol-d2), di(ethylene glycol-d2), 2-(2-ethoxyethoxy)ethanol-OD, glycer(ol-d3), hexafluoroisopropanol-d2, isopropanol-d8, methyl alcohol-d4, methyl alcohol-OD, trifluoroethyl alcohol-d2, OH, trifluororethyl alcohol-d3, pentafluorophenol-OD, phenol-d6, acetone-d₆, 2-butanone-1,1,1,3,3-d5, 4-methyl-2-pentanone-1,1,1,3,3-d5, cyclohexanone-d10, cyclohexanone-2,2,6,6-d4, cyclopentanone-2,2,5,5-d4, acetophenone-β,β,β-d3, acetaldehyde-d4, ethyl acetate-d8, nitromethane-d3, succinic anhydride-2,2,3,3-d4, dimethyl succinate-2,2,3,3-d4, diethyl malonate-d2, acetic acid-d₄, acetic acid-d, formic acid-d2, propanoic acid-d6, propionic-2,2-d2 acid-d, butyric acid-d8, trifluoroacetic acid-d, benzoic acid-d, succinic acid-d6, and malonic acid-d4.

More preferred examples are ethyl alcohol-OD, glycer(ol-d3), isopropanol-d8, methyl alcohol-d4, methyl alcohol-OD, acetone-d₆, nitromethane-d3, acetic acid-d₄, acetic acid-d, trifluoroacetic acid-d, and malonic acid-d4. Most preferred in terms of efficiency and costs are ethyl alcohol-OD and methyl alcohol-OD.

As examples of the other deuterated or tritiated solvent(s), and the non-deuterated and non-tritiated solvent(s) which may be used in combination with (a) solvent(s) selected from s1) to s8) in a preferred solvent system are ethers, alkanes, cycloalkanes, amides, sulfoxides, haloalkanes or esters, such as THF, N,N-dimethyl formamide, benzene, toluene, xylene, mesitylene, dimethylsulfoxide, dichloromethane, chloroform, and any deuterated or tritited version of those (the esters or amides being differnt from the deuterated or tritiated esters encompassed by s3) or the deuterated or tritiated amides encompassed by s6) above).

Further in the method in accordance with the present invention, at least one hydrogen atom directly bonded to a carbon ring atom of an aromatic ring comprised by the aromatic starting compound with a deuterium or tritium atom is replaced via the transfer of at least one deuterium of tritium atom from the deuterated or tritiated solvent to the aromatic starting compound dissolved or dispersed in the liquid composition in the presence of an acid. This part of the method in accordance with the invention may also be referred to herein as the replacement reaction.

The term "acid", as used herein, refers in the broadest sense to a proton donating substance that, when dissolved or dispersed in water, gives a solution with a pH of less than 7.0. The term "acid" encompasses both inorganic and organic acids. The acid can be a liquid, a gas or a solid, and is dissolved or dispersed in the solvent or solvent system to treat the liquid composition with the acid. If the acid is in liquid form under the conditions used for the replacement reaction of hydrogen with deuterium or tritium, it may form a component of the solvent system. It can also be a solid-supported acid on a polymer, on silica particles or other types of solid-support. Suitable acids include, but are not limited to, perchloric acid, chloric acid, chlorous acid, hypochlorous acid, hydrochloric acid, bromic acid, hydrobromic acid, periodic acid, iodic acid, hydroiodic acid, hydrofluoric acid, sulfuric acid, various sulfonic acids (e.g. triflic acid, tosylic acid, mesylic acid), sulfinic acids (e.g. methanesulfinic acid), bisulfate, sulfurous acid, nitric acid, trifluoroacetic acid, trichloroacetic acid, "super acids" (e.g. fluoroantimonic acid, magic acid (FSO₃H*SbF₅), carborane acids, fluorosulfonic acid, oleum, teflic acid), picric acid, thiocyanic acid, anilinium ions, arsenic acid, sulfonium ions and protonated ethers/ketones/aldehydes/carboxylic acids. Preferably, at least one acid with a pKa value in water lower than 3 is used (unless indicated otherwise, the pKa is determined at 20 °C). For acids with multiple ionizable protons, this refers to the lowest pKa value. More preferably, at least one acid with a pKa value in water lower than 1 is used. Even more preferably, at least one acid with a pKa value in water lower than -1 is used. Still more preferably, one or more of hydrobromic acid, hydrochloric acid, sulfuric acid, triflic acid, mesylic acid, tosylic acid and perchloric acid are used. Most preferably, perchloric acid is used.

Alternatively, deuterated derivatives of the above mentioned acids may be used, but preferably the acid is not deuterated. If a deuterated acid is used, it is typically different from the deuterated solvent which is not water as discussed above.

In this method of the present invention, the acid is generally used at a concentration with regard to the aromatic starting compound of 0.001 mol% to 500 mol% (based on the amount of the aromatic starting compound as 100 mol%). Preferably, the acid is used at a concentration of 0.01 mol% to 500 mol%. More preferably, the acid is used at a concentration of 0.1 mol% to 100 mol%. Still more preferably, the acid is used at a concentration of 1 mol% to 50 mol%. If more than one acid is used, the concentration is the total concentration of the acids.

The replacement reaction in the presence of an acid can be carried out in a reaction vessel customary for such a procedure, such as a round-bottom flask, a pressure tube, a microwave vial, or a headspace vials. It is possible for the replacement reaction to be carried out continuously, semi-continuously or discontinuously. Other vessels known to the person skilled in the art may also be used.

The solution or dispersion comprising the aromatic starting compound may be manipulated by stirring, shaking or other methods of mixing. The replacement reaction may be performed under microwave irradiation or supersonic irradiation, if desired. Preferably, the solution or dispersion is stirred, more preferably the solution or dispersion is stirred by a magnetic stirrer. Other methods known to the person skilled in the art may also be applied.

As a rule, the replacement reaction in the presence of acid is carried out under atmospheric pressure. However, the reaction may also be carried out under reduced (e.g., 1 to less than 100 kPa) or elevated pressure (e.g., more than 100 kPa to 10 MPa). Preferably, the reaction is carried out between 50 kPa and 1 MPa, more preferably between 80 kPa and 200 kPa.

The optimum reaction temperature during the replacement reaction is determined by several factors, such as the reactivity and solubility of the reactants used and the stability of the aromatic starting compound towards side reactions, and can be determined by a person skilled in the individual case, for example by simple preliminary experiments. In general, the replacement reaction in the presence of an acid is carried out at a temperature in the range of preferably -78 °C to 200 °C, more preferably -20 °C to 100 °C and most preferably from 0 °C to 80 °C.

As indicated above, the deuterated or tritiated solvent which is not water or the solvent system comprising at least one deuterated or tritiated solvent which is not water are in a liquid state at the temperature at which the replacement reaction is carried out. However, at elevated temperatures, the solvent(s) (including possible co-solvent(s)) and acid(s) used may be partially present in the gaseous state.

The optimum reaction time for the reaction in the presence of the acid is determined by several factors, such as the reactivity of the reactants and the stability of the aromatic starting compound towards side reactions, and can be determined by a person skilled in the individual case, for example by simple preliminary experiments. In general, the reaction of the aromatic starting compound in the presence of an acid is carried out at a time range of preferably 1 min to 8 weeks, preferably 5 min to 4 weeks, particularly preferably 10 min to 2 weeks and still more preferably 20 min to 5 days.

If desired, heating of the composition wherein the aromatic starting compound is dissolved or dispersed may be achieved through several methods, such as heating with an oil bath, sand bath, air bath, microwave irradiation or light irradiation. Other methods known to the person skilled in the art may also be applied.

The reaction in the presence of an acid may be performed under air or inert gas atmosphere such as N₂, helium or argon atmosphere. Preferably the treatment is performed under inert gas atmosphere. More preferably, the treatment is accomplished under N₂ or argon atmosphere. Mixtures of the abovementioned gases among each other and with air are also suitable. For particular aromatic starting compounds, oxygen and mixtures thereof can also be used.

The gas(es) may be employed in dried or non-dried state.

The reaction mixture may also be irradiated with visible light, ultraviolet light or infrared light or the reaction may be performed in the absence of light. Preferably, the treatment with the acid is performed under daylight.

In the method according to the invention for the preparation of a deuterated or tritiated compound, the aromatic starting compound is preferably used in an amount of 0.00001 to 5.0 mol, particularly preferably 0.0001 to 1.0 mol and preferably from 0.001 to 0.3 mol.

The reaction mixture in which the replacement reaction in the presence of an acid is accomplished can be provided by mixing the aromatic starting compound, the solvent(s) (including any co-solvents that may be used), the acid(s) and any further optional component under given conditions. The order of addition may be suitably chosen with consideration given to the practicability of the method. Generally, the order of addition is not relevant.

As examples of further optional components of the reaction mixture, reference can be made to solubilizers or salts.

The term "solubilizer" refers to (surfactant) substances which, by their presence, render another compound which is substantially insoluble in a solvent or solvent system soluble or emulsifiable in this solvent or solvent system. There are solubilizers which form a molecular compound with the sparingly soluble substance. It can also be said that solubilizers impart solubility to a so-called latent solvent, for example, ethanol (as a latent solvent) dissolves cellulose acetate poorly, but after the addition of 2-nitropropane (as a solubilizer) dissolves much better.

The term "salts" refers to substances which, by their presence, influence the solubility or reactivity of other compounds in the reaction mixture.

As noted above, the replacement reaction can be conveniently accomplished in the absence of any of a transition metal, a transition metal compound and a transition metal complex.

After the replacement reaction, the obtained deuterated or tritiated compound may be isolated.

The workup of the mixture resulting from the replacement reaction to isolate the obtained deuterated or tritiated compound can be carried out in a conventional manner, for example by an extractive workup, by removing the solvent e.g. under reduced pressure, or by a combination of these measures. Further purification of the obtained deuterated or tritiated compound can be accomplished, if desired, for example by crystallization, distillation or by chromatography. Other methods known to the person skilled in the art may also be applied.

According to a preferred embodiment of the invention, the mixture resulting from the replacement reaction in the presence of an acid is diluted with water for workup and extracted several times with a suitable organic solvent and the combined organic phases are concentrated. Depending on the acid-base properties, if necessary, the pH of the mixture is suitably adjusted before extraction by the addition of an acid or base. Examples of suitable organic solvents are listed above. Examples are ethyl acetate, dichloromethane, chloroform, diethyl ether, methyl tert-butylether, benzene or toluene. The product isolated in this way can then be kept ready for use or used directly, for example in a further reaction step, or be further purified beforehand.

The method of the present invention can also be applied to aromatic starting compounds carrying at least one deuterium or tritium atom bonded to an aromatic ring and carrying at least one hydrogen atom directly bonded to an aromatic ring, such that (a) further hydrogen atom(s) directly bound to an aromatic ring are replaced by deuterium or tritium. For example, the method in accordance with the invention can comprise one or more (e.g. one or two) repetitions of steps a) and b) above, wherein, after step b), the deuterated or tritiated compound obtained in step b) is recycled as an an aromatic starting compound to a further step a), generally after its isolation from the mixture resulting from step b). In this manner, the grade of deuteration or tritiation of the concerned compound may be increased.

Thus, the present invention also encompasses a method for the preparation of a deuterated or tritiated compound via deuteration or tritiation of an aromatic starting compound which comprises an aromatic ring or a fused aromatic ring system which may be carbocyclic or hetercyclic and which carries at least one hydrogen atom directly bonded to a carbon ring atom of an aromatic ring, said method comprising:
a) providing a liquid composition wherein the aromatic starting compound is dissolved or dispersed in a deuterated or tritiated solvent which is not water, or in a solvent system comprising at least one deuterated or tritiated solvent which is not water; and
b) replacing at least one hydrogen atom directly bonded to a carbon ring atom of an aromatic ring comprised by the aromatic starting compound with a deuterium or tritium atom via the transfer of at least one deuterium of tritium atom from the deuterated or tritiated solvent to the aromatic starting compound dissolved or dispersed in the liquid composition in the presence of an acid,
   to convert the aromatic starting compound to a deuterated or tritiated aromatic compound which comprises an aromatic ring or a fused aromatic ring system which may be carbocyclic or hetercyclic and which carries at least one deuterium or tritium atom directly bonded to a carbon ring atom of an aromatic ring,
c) isolating the deuterated or tritiated compound obtained by the replacement in step b);
d) recycling the deuterated or tritiated compound isolated in step c) as an aromatic starting compound to a further step a) and a further step b); and
e) optionally repeating steps c) and d) one or more times.

As will be understood by the skilled reader, any of the above embodiments of the new method can be combined with one or more of the other embodiments, as long as they are not mutually exclusive. For example, the embodiment in which the reaction is conducted under argon can be combined with the embodiment in which the temperature is between 70° C. and 80° C. The same is true for the other non-mutually-exclusive embodiments discussed above. The skilled person would understand which embodiments were mutually exclusive and would thus readily be able to determine the combinations of embodiments that are contemplated by the present application.

### EXAMPLES

Solvents and reagents are obtained from commercial sources and used as received. ¹H-NMR and ¹³C-NMR spectra are recorded on Bruker Avance 600 (¹H: 600 MHz; ¹³C: 151 MHz) and Bruker Avance 400(¹H: 400 MHz; ¹³C: 101 MHz) spectrometers. For ¹H-NMR spectra CDCl₃ is used as solvent referenced to TMS (0 ppm): CHCl₃ (7.26 ppm), (CD₃)₂SO (2.50 ppm), CD₃OD (3.31 ppm). Chemical shifts are reported in parts per million (ppm). Coupling constants are in Hertz (Hz). The following abbreviations are used for the description of signals: s (singlet), d (doublet), t (triplet), q (quartet), m (multiplet), bs (broad singlet). ¹³C-NMR (DEPTQ) spectra are recorded in CDCl₃ using CDCl₃ (77.16 ppm) and in (CD₃)₂SO using (CD₃)₂SO (39.52 ppm) as standard, respectively. Chemical shifts are given in parts per million (ppm). Mass spectra are recorded using electron spray ionization (ESI) and Atomospheric Pressure Photoionization (APPI) and a sector field mass analyzer for HRMS measurements. Analytical TLC is carried out on Merck silica gel plates using short wave (254 nm) UV light to visualize components. Silica gel (Kieselgel 60, 40-63mm, Merck) is used for flash column chromatography. The purity of the substances was determined using an analytical HPLC: System A: Waters XBridge C18 analytical column, 2.3 mm x 50 mm, 3.5 µm, flow rate: 0.50 mL/min, Eluent: CH₃CN in H₂O + 0.1% HCO₂H (0-15 min 10%-90%, 15-18 min 90%). System B: Waters XBridge C18 analytical column, 2.1 mm x 50 mm, 3.5 µm, flow rate: 0.75 mL/min, Eluent: CH₃CN in H₂O + 0.1% HCO₂H (0-15 min 0%-90%, 15-18 min 90%). System B Waters XBridge C18 analytical column, 2.1 mm x 50 mm, 3.5 µm, flow rate: 0.50 mL/min, Eluent: CH₃CN in H₂O + 0.1% HCO₂H (0-15 min 0%-90%, 15-18 min 90%).

**General Procedure A:** The aromatic starting compound (0.1 mmol) was dissolved in MeOD-d₄ (1 mL). If needed, d₆-DMSO or CDCl₃ was added as a co-solvent. A 70% solution of HClO₄ (0.005 mmol, 5 mol%, 0.42 µL) was added and the mixture was kept at the according temperature under argon. The deuterium incorporation and yield was determined by ¹H NMR analysis of the mixture in presence of ethylene carbonate as an internal standard (1 M in d₄-MeOD, 50 µL, 50 µmol).

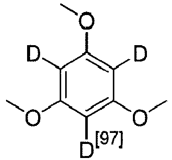

**2,4,6-[D₃]-1,3,5-Trimethoxybenzene** was prepared from 1,3,5-trimethoxybenzene (0.1 mmol, 16.8 mg) according to the General Procedure A for 4 h at rt (100 µmol, 100% yield, 97% deuterium incorporation). ¹H NMR (400 MHz, MeOD) δ 6.1 (s, 0H), 3.8 (s, 9H).

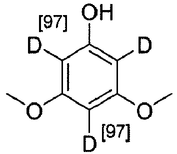

**2,4,6-[D₃]-3,5-Dimethoxyphenol** was prepared from 3,5-dimethoxyphenol (0.1 mmol, 15.4 mg) according to the General Procedure A for 4 h at rt (92 µmol, 92% yield, 97% deuterium incorporation). ¹H NMR (400 MHz, MeOD) δ 6.0 (d, *J* = 5.0 Hz, 0H), 3.7 (s, 6H).

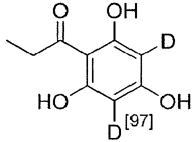

**3,5-[D₂]-1-(2,4,6-Trihydroxyphenyl)propan-1-one** was prepared from 1-(2,4,6-trihydroxyphenyl)propan-1-one (0.1 mmol, 18.2 mg) according to the General Procedure A for 15 h at rt (87 µmol, 87% yield, 97% deuterium incorporation). ¹H NMR (400 MHz, MeOD) δ 5.8 (s, 0H), 3.1 (q, *J* = 7.3 Hz, 2H), 1.1 (t, *J* = 7.3 Hz, 3H).

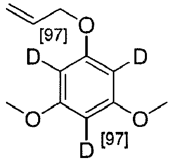

**2,4,6-[D₃]-1-(Allyloxy)-3,5-dimethoxybenzene** was prepared from 1-(allyloxy)-3,5-dimethoxybenzene (0.1 mmol, 19.4 mg) according to the General Procedure A for 15 h at rt (90 µmol, 90% yield, 97% deuterium incorporation). ¹H NMR (400 MHz, MeOD) δ 6.1 - 6.0 (m, 1H), 5.4 (dq, *J* = 1.7, 17.3 Hz, 1H), 5.3 (dq, *J* = 1.5, 10.6 Hz, 1H), 4.5 (dt, *J* = 1.6, 5.2 Hz, 2H), 3.7 (s, 6H).

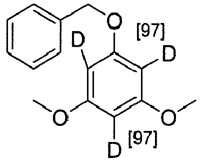

**2,4,6-[D₃]-1-(Benzyloxy)-3,5-dimethoxybenzene** was prepared from 1-(benzyloxy)-3,5-dimethoxybenzene (0.1 mmol, 24.4 mg) according to the General Procedure A for 15 h at rt (100 µmol, 100% yield, 97% deuterium incorporation). ¹H NMR (400 MHz, MeOD) δ 7.5 - 7.2 (m, 3H), 6.2 (s, 0H), 6.1 (s, 0H), 5.0 (s, 1H), 3.7 (s, 3H).

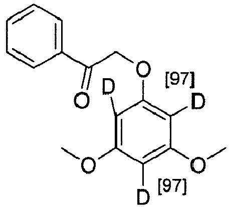

**2,4,6-[D₃]-2-(3,5-Dimethoxyphenoxy)-1-pheny)ethan-1-one** (was prepared from 2-(3,5-dimethoxyphenoxy)-1-phenylethan-1-one (0.1 mmol, 27.2 mg) according to the General Procedure A for 15 h at rt (82 µmol, 82% yield, 97% deuterium incorporation). CDCl₃ (1 mL) was used as a co-solvent. ¹H NMR (400 MHz, MeOD) δ 8.0 - 8.0 (m, 2H), 7.6 (ddt, *J* = 1.3, 6.9, 8.0 Hz, 1H), 7.6 - 7.5 (m, 2H), 6.1 (s, 0H), 6.1 (s, 0H), 5.3 (s, 2H), 3.7 (s, 6H).

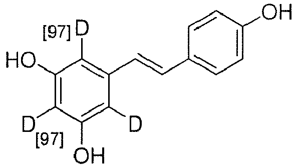

**2,4,6-[D₃]-Resveratrol** was prepared from resveratrol (0.1 mmol, 28.8 mg) according to the General Procedure A for 4 h at rt (100 µmol, 100% yield, 97% deuterium incorporation). ¹H NMR (400 MHz, MeOD) δ 7.4 - 7.3 (m, 2H), 7.0 (d, *J* = 16.3 Hz, 1H), 6.9 - 6.8 (m, 3H), 6.5 (s, 0H), 6.2 (s, 0H).

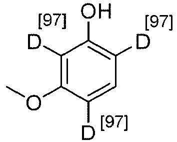

**2,4,6-[D₃]-3-Methoxyphenol** was prepared from 3-methoxyphenol (0.1 mmol, 12.4 mg) according to the General Procedure A for 15 h at 75 °C (95 µmol, 95% yield, 97% deuterium incorporation). The deuterium incorporation and yield was determined by ¹H NMR analysis of the mixture in presence of ethylene carbonate as an internal standard (1 M in d₄-MeOD, 25 µL, 25 µmol). ¹H NMR (400 MHz, MeOD) δ 7.1 (s, 1H), 6.4 - 6.3 (m, 0H), 3.7 (s, 3H).

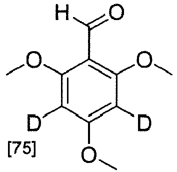

**3,5-[D₂]-2,4,6-Trimethoxybenzaldehyde** was prepared from 2,4,6-trimethoxybenzaldehyde (0.1 mmol, 19.6 mg) according to the General Procedure A for 9 d at rt (32 µmol, 32% yield, 75% deuterium incorporation). ¹H NMR (400 MHz, MeOD) δ 10.3 (s, 1H), 6.3 (s, 0H), 4.0 (s, 3H), 4.0 (s, 6H).

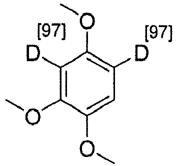

**3,5-[D₂]-1,2,4-Trimethoxybenzene** was prepared from 1,2,4-trimethoxybenzene (0.1 mmol, 16.8 mg) according to the General Procedure A for 15 h at 75 °C (100 µmol, 100% yield, 97% deuterium incorporation). ¹H NMR (400 MHz, MeOD) δ 7.0 (s, 1H), 6.7 (s, 0H), 6.7 (s, 0H), 3.8 (s, 6H), 3.8 (s, 3H).

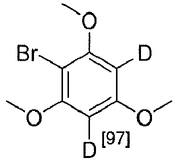

**4,6-[D₂]-2-Bromo-1,3,5-trimethoxybenzene** was prepared from 2-bromo-1,3,5-trimethoxybenzene (0.1 mmol, 24.7 mg) according to the General Procedure A for 4 d at rt (100 µmol, 100% yield, 97% deuterium incorporation). CDCl₃ (1 mL) was used as a co-solvent. ¹H NMR (400 MHz, MeOD) δ 6.2 (s, 0H), 3.9 (s, 6H), 3.8 (s, 3H).

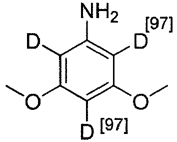

**2,4,6-[D₃]-3,5-Dimethoxyaniline** was prepared from 3,5-dimethoxyaniline (0.1 mmol, 15.3 mg) according to the General Procedure A for 15 h at 75 °C (84 µmol, 84% yield, 97% deuterium incorporation). ¹H NMR (400 MHz, MeOD) δ 6.0 (s, 0H), 6.0 (s, 0H), 3.7 (s, 6H).

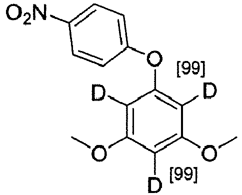

**2,4,6-[D₃]-1,3-Dimethoxy-5-(4-nitrophenoxy)benzene** was prepared from 1,3-dimethoxy-5-(4-nitrophenoxy)benzene (0.1 mmol, 27.5 mg) according to the General Procedure A for 4 d at rt (100 µmol, 100% yield, 99% deuterium incorporation). CDCl₃ (1 mL) was used as a co-solvent. ¹H NMR (400 MHz, MeOD) δ 8.2 - 8.2 (m, 2H), 7.1 - 7.0 (m, 2H), 6.4 (s, 0H), 6.2 (s, 0H), 3.8 (s, 6H).

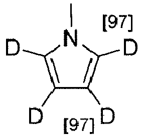

**2,3,4,5-[D₄]-*N*-Methyl-pyrrole** was prepared from *N*-methyl-pyrrole (0.1 mmol, 8.1 mg) according to the General Procedure A for 15 h at 75 °C (84 µmol, 84% yield, 97% deuterium incorporation). ¹H NMR (400 MHz, MeOD) δ 6.6 (s, 0H), 6.0 (s, 0H), 3.7 (s, 3H).

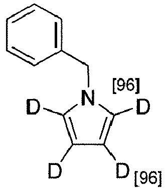

**2,3,4,5-[D₄]-*N*-Benzyl-pyrrole** was prepared from *N*-benzyl-pyrrole (0.1 mmol, 15.7 mg) according to the General Procedure A for 15 h at 75 °C (96 µmol, 96% yield, 96% deuterium incorporation). ¹H NMR (400 MHz, MeOD) δ 7.4 - 7.2 (m, 3H), 7.2 - 7.1 (m, 2H), 6.7 (s, 0H), 6.1 (s, 0H), 5.1 (d, *J* = 0.9 Hz, 2H).

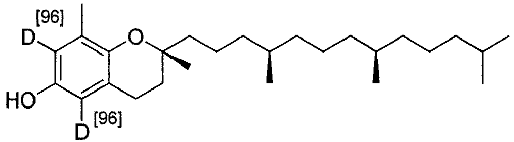

**5,7-[D₂]-δ-Tocopherol** was prepared from δ-tocopherol (0.1 mmol, 40.2 mg) according to the General Procedure A for 15 h at 75 °C (100 µmol, 100% yield, 96% deuterium incorporation). CDCl₃ (0.5 mL) was used as a co-solvent. ¹H NMR (400 MHz, MeOD) δ 6.4 (d, *J* = 0.9 Hz, 0H), 6.4 - 6.3 (m, 0H), 2.7 (td, *J* = 1.3, 6.8 Hz, 2H), 2.1 (s, 3H), 1.8 (ddq, *J* = 6.8, 13.5, 20.2 Hz, 2H), 1.7 - 1.0 (m, 18H), 0.9 - 0.8 (m, 13H).

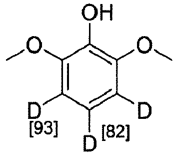

**3,4,5-[D₃]-2,6-Dimethoxyphenol** was prepared from 2,6-dimethoxyphenol (0.1 mmol, 15.5 mg) according to the General Procedure A for 3 d at 75 °C (100 µmol, 100% yield, 93% (3,5-d₂) / 82% (4-d) deuterium incorporation). ¹H NMR (400 MHz, MeOD) δ 6.8 (s, 0H), 6.6 - 6.6 (m, 0H), 3.8 (s, 6H).

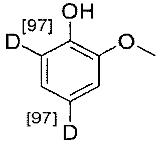

**4,6-[D₂]-2-Methoxyphenol** was prepared from 2-methoxyphenol (0.1 mmol, 12.4 mg) according to the General Procedure A for 3 d at 75 °C (100 µmol, 100% yield, 93% (3,5-d₂) / 82% (4-d) deuterium incorporation). ¹H NMR (400 MHz, MeOD) δ 6.9 (s, 1H), 6.9 - 6.8 (m, 1H), 3.9 (s, 3H).

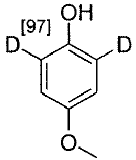

**2,6-[D₂]-4-Methoxyphenol** was prepared from 4-methoxyphenol (0.1 mmol, 12.4 mg) according to the General Procedure A for 3 d at 75 °C (100 µmol, 100% yield, 97% deuterium incorporation). ¹H NMR (400 MHz, MeOD) δ 6.8 - 6.7 (m, 2H), 3.7 (s, 3H).

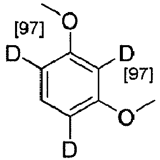

**2,4,6-[D₃]-1,3-Dimethoxybenzene** was prepared from 1,3-dimethoxybenzene (0.1 mmol, 13.8 mg) according to the General Procedure A for 3 d at 75 °C (100 µmol, 100% yield, 97% deuterium incorporation). ¹H NMR (400 MHz, MeOD) δ 7.2 (d, J = 1.3 Hz, 1H), 6.6 - 6.4 (m, 0H), 3.8 (s, 6H).

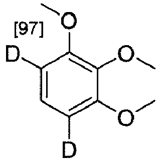

**4,6-[D₂]-1,2,3-Trimethoxybenzene** was prepared from 1,2,3-trimethoxybenzene (0.1 mmol, 16.7 mg) according to the General Procedure A for 2 d at 75 °C (100 µmol, 100% yield, 97% deuterium incorporation). ¹H NMR (400 MHz, MeOD) δ 7.0 (s, 1H), 6.7 (s, 0H), 6.7 (s, 0H), 3.8 (s, 6H), 3.8 (s, 3H).

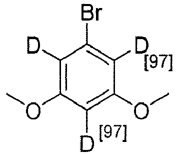

**2,4,6-[D₃]-1-Bromo-3,5-dimethoxybenzene** was prepared from 1-bromo-3,5-dimethoxybenzene (0.1 mmol, 21.7 mg) according to the General Procedure A for 3 d at 75 °C (94 µmol, 94% yield, 97% deuterium incorporation). ¹H NMR (400 MHz, MeOD) δ 6.7 (s, 0H), 6.5 (s, 0H), 3.8 (s, 6H).

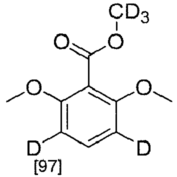

**3,5-[D₂]-Methyl-d₃ 2,6-dimethoxybenzoate** was prepared from 2,6-dimethoxybenzoic acid (0.1 mmol, 18.2 mg) according to the General Procedure A for 3 d at 75 °C (91 µmol, 91% yield, 97% deuterium incorporation). ¹H NMR (400 MHz, MeOD) δ 7.4 (s, 1H), 6.7 (d, *J* = 8.4 Hz, 0H), 3.8 (s, 6H).

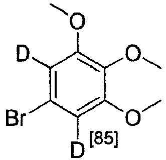

**4,6-[D₂]-5-Bromo-1,2,3-trimethoxybenzene** was prepared from 5-bromo-1,2,3-trimethoxybenzene (0.1 mmol, 24.6 mg) according to the General Procedure A for 4 d at 75 °C (96 µmol, 96% yield, 85% deuterium incorporation). ¹H NMR (400 MHz, MeOD) δ 6.8 (d, *J* = 0.6 Hz, 0H), 3.8 (s, 6H), 3.8 (s, 3H).

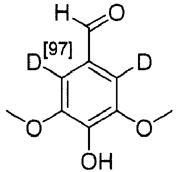

**2,6-[D₂]-4-Hydroxy-3,5-dimethoxybenzaldehyde (25)** was prepared from 4-hydroxy-3,5-dimethoxybenzaldehyde (0.1 mmol, 18.2 mg) according to the General Procedure A for 2 d at 75 °C (23 µmol, 23% yield, 97% deuterium incorporation). ¹H NMR (400 MHz, MeOD) δ 9.8 (s, 1H), 7.3 (d, *J =* 31.5 Hz, 0H), 3.9 (s, 6H).

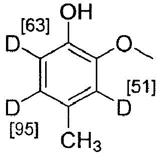

**3,5,6-[D₃]-2-Methoxy-4-methylphenol** was prepared from 2-methoxy-4-methylphenol (0.1 mmol, 13.8 mg) according to the General Procedure A for 4 d at 75 °C (100 µmol, 100% yield, 95% (5-d) / 63% (6-d) / 51% (3-d) deuterium incorporation). ¹H NMR (400 MHz, MeOD) δ 6.7 (s, 0H), 6.7 (s, 0H), 6.6 - 6.6 (m, 0H), 3.8 (s, 3H), 2.3 (s, 3H).

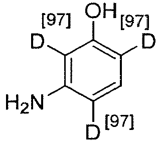

**2,4,6-[D₃]-3-Aminophenol** was prepared from 3-aminophenol (0.1 mmol, 11.0 mg) according to the General Procedure A for 2 d at 75 °C (92 µmol, 92% yield, 97% deuterium incorporation). ¹H NMR (400 MHz, MeOD) δ 6.9 (s, 1H), 6.3 (d, *J* = 7.9 Hz, 0H), 6.3 (s, 0H), 6.2 (d, *J* = 8.1 Hz, 0H).

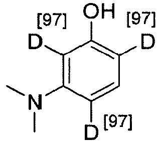

**2,4,6-[D₃]-3-(Dimethylamino)phenol** was prepared from 3-(dimethylamino)phenol (0.1 mmol, 13.7 mg) according to the General Procedure A for 2 d at 75 °C (71 µmol, 71% yield, 97% deuterium incorporation). ¹H NMR (400 MHz, MeOD) δ 7.0 (s, 1H), 6.4 - 6.2 (m, 0H), 2.9 (s, 6H).

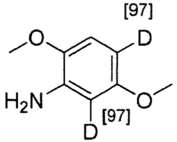

**4,6-[D₂]-2,5-Dimethoxybenzenamine** was prepared from 2,5-dimethoxybenzenamine (0.1 mmol, 15.3 mg) according to the General Procedure A for 3 d at 75 °C (95 µmol, 95% yield, 97% deuterium incorporation). ¹H NMR (400 MHz, MeOD) δ 6.8 (s, 1H), 6.5 (s, 0H), 6.3 (d, *J* = 8.7 Hz, 0H), 3.9 (s, 3H), 3.8 (s, 3H).

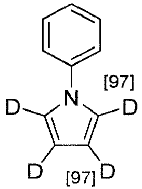

2,3,4,5-[D₄]-*N*-Phenyl-pyrrole was prepared from *N*-phenyl-pyrrole (0.1 mmol, 14.3 mg) according to the General Procedure A for 2 d at 75 °C (90 µmol, 90% yield, 97% deuterium incorporation). ¹H NMR (400 MHz, MeOD) δ 7.5 - 7.4 (m, 4H), 7.2 (ddt, *J* = 1.7, 6.4, 7.1 Hz, 1H), 7.2 (s, 0H), 6.3 (s, 0H).

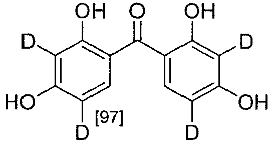

**3,3',5,5'-[D₄]-Bis(2,4-dihydroxyphenyl)methanone** was prepared from bis(2,4-dihydroxyphenyl)methanone (0.1 mmol, 24.6 mg) according to the General Procedure A for 3 d at 75 °C (85 µmol, 85% yield, 97% deuterium incorporation). ¹H NMR (400 MHz, MeOD) δ 7.4 (s, 2H), 6.4 - 6.4 (m, 0H).

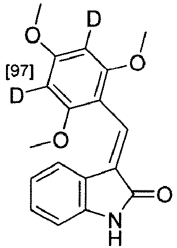

**3,5-[D₂]-3-(2,4,6-Trimethoxybenzylidene)indolin-2-one (IC261-d₂)** was prepared from 3-(2,4,6-trimethoxybenzylidene)indolin-2-one (IC261) (0.1 mmol, 31.1 mg, E/Z : 10:1) according to the General Procedure A for 1 d at 75 °C (100 µmol, 100% yield, 97% deuterium incorporation, E/Z : 10:1). CDCl₃ (1 mL) was used as a co-solvent. ¹H NMR (400 MHz, CDCl₃) δ 7.8 (s, 1H), 7.2 (td, *J* = 1.3, 7.6 Hz, 1H), 7.0 - 7.0 (m, 1H), 6.9 (ddd, *J =* 1.2, 6.6, 7.7 Hz, 2H), 6.2 (s, 0H), 3.9 (s, 3H), 3.8 (s, 6H).

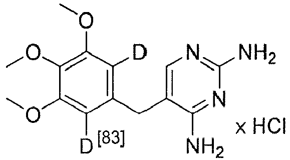

4,6-[D₂]-Trimethoprim hydrochloride was prepared from trimethoprim hydrochloride (0.2 mmol, 67.3 mg) according to the General Procedure A for 3 d at 75 °C (168 µmol, 84% yield, 83% deuterium incorporation). ¹H NMR (400 MHz, MeOD) δ 7.2 (s, 1H), 6.5 (s, 0H), 3.8 (s, 6H), 3.7 (s, 3H), 3.6 (s, 2H).

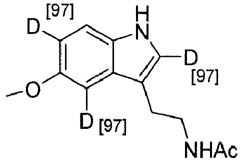

**4,6-[D₂]-Melatonin** was prepared from melatonin (0.1 mmol, 23.2 mg) according to the General Procedure A for 1 d at 75 °C (100 µmol, 100% yield, 97% deuterium incorporation). ¹H NMR (400 MHz, MeOD) δ 7.2 (s, 1H), 7.1 - 7.0 (m, 0H), 6.8 (d, *J* = 8.8 Hz, 0H), 3.8 (s, 3H), 3.5 (t, *J* = 7.3 Hz, 2H), 3.0 - 2.8 (m, 2H), 1.9 (s, 3H).

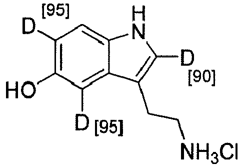

**2,4,6-[D₃]-Serotonin hydrochloride** was prepared from serotonin-HCl (0.086 mmol, 18.2 mg) according to the General Procedure A for 1 d at 75 °C (81 µmol, 95% yield, 95% (4-d, 6-d) / 90% (2-d) deuterium incorporation). The deuterium incorporation and yield was determined by ¹H NMR analysis of the mixture in presence of ethylene carbonate as an internal standard (1 M in d₄-MeOD, 21.4 µL, 21.4 µmol). ¹H NMR (400 MHz, MeOD) δ 7.2 (s, 1H), 7.1 (d, *J* = 0.8 Hz, 0H), 7.0 (d, *J* = 0.6 Hz, 0H), 6.7 (d, *J* = 8.7 Hz, 0H), 3.2 (t, *J* = 7.3 Hz, 2H), 3.1 (ddd, *J* = 0.9, 7.1, 7.9 Hz, 2H).

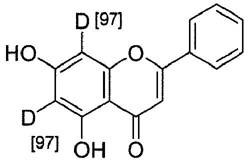

**6,8-[D₂]-Chrysin** was prepared from chrysin (0.1 mmol, 25.4 mg) according to the General Procedure A for 3 d at 75 °C (100 µmol, 100% yield, 97% deuterium incorporation). d₆-DMSO (1 mL) and CDCl₃ (1 mL) were used as co-solvents. ¹H NMR (400 MHz, MeOD) δ 8.0 - 8.0 (m, 2H), 7.6 - 7.5 (m, 3H), 6.8 (s, 1H), 6.5 (s, 0H), 6.3 (s, 0H).

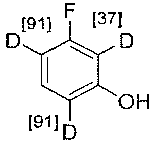

**2,4,6-[D₃]-3-Fluorophenol** was prepared from 3-fluorophenol (0.1 mmol, 11.2 mg) according to the General Procedure A for 9 d at 75 °C (99 µmol, 99% yield, 91% (4,6-d₂) / 37% (2-d) deuterium incorporation). ¹H NMR (400 MHz, MeOD) δ 7.0 (s, 1H), 6.4 - 6.2 (m, 0H), 2.9 (s, 6H).

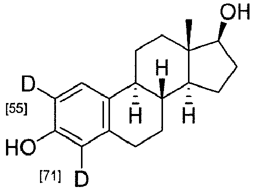

**2,4-[D₂]-Estradiol** was prepared from estradiol (0.1 mmol, 27.2 mg) according to the General Procedure A for 6 d at 75 °C (100 µmol, 100% yield, 71% (4-d) / 55% (2-d) deuterium incorporation). CDCl₃ (1 mL) was used as a co-solvent. ¹H NMR (400 MHz, MeOD) δ 7.1 - 7.1 (m, 1H), 6.6 (d, *J* = 8.5 Hz, 0H), 6.5 (t, *J* = 1.2 Hz, 0H), 3.7 (t, *J* = 8.6 Hz, 1H), 3.0 - 2.7 (m, 2H), 2.3 (dtd, *J* = 2.6, 4.2, 13.3 Hz, 1H), 2.1 (td, *J* = 4.3, 11.1 Hz, 1H), 2.0 (dtd, *J* = 5.7, 9.3, 13.2 Hz, 1H), 2.0 - 1.9 (m, 1H), 1.9 - 1.8 (m, 1H), 1.8 - 1.6 (m, 1H), 1.6 - 1.3 (m, 3H), 1.2 - 1.1 (m, 3H), 0.8 (d, *J* = 0.6 Hz, 3H).

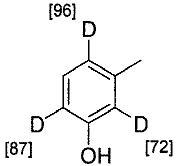

**2,4,6-[D₃]-*m*-Cresol** was prepared from m-cresol (0.1 mmol, 10.8 mg) according to the General Procedure A for 6 d at 75 °C (100 µmol, 100% yield, 96% (4-d) / 87% (2-d) / 72% (6-d) deuterium incorporation). ¹H NMR (400 MHz, MeOD) δ 7.0 (s, 1H), 6.6 (dt, *J* = 0.7, 7.6 Hz, 0H), 6.6 - 6.6 (m, 0H), 6.6 (dq, *J* = 0.6, 8.1 Hz, 0H), 2.3 (s, 3H).

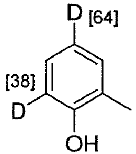

**4,6-[D₂]-*o*-Cresol** was prepared from *o*-cresol (0.1 mmol, 10.8 mg) according to the General Procedure A for 6 d at 75 °C (100 µmol, 100% yield, 64% (4-d) / 38% (2-d) deuterium incorporation). ¹H NMR (400 MHz, MeOD) δ 7.0 (tdt, *J* = 0.8, 1.5, 3.3 Hz, 1H), 7.0 - 6.9 (m, 1H), 6.7 (d, *J* = 8.0 Hz, 1H), 6.8 - 6.7 (m, 0H), 2.2 (d, *J* = 0.7 Hz, 3H).

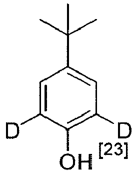

**2,6-[D₂]-4-(*tert*-Butyl)phenol** was prepared from 4-(*tert*-butyl)phenol (0.1 mmol, 15.0 mg) according to the General Procedure A for 6 d at 75 °C (100 µmol, 100% yield, 23% deuterium incorporation). ¹H NMR (400 MHz, MeOD) δ 7.2 - 7.2 (m, 2H), 6.8 - 6.7 (m, 2H), 1.3 (s, 12H).

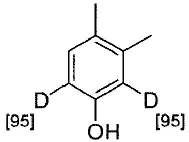

**2,6-[D₂]-3,4-Dimethylphenol** was prepared from 3,4-dimethylphenol (0.1 mmol, 12.2 mg) according to the General Procedure A for 6 d at 75 °C (100 µmol, 100% yield, 95% deuterium incorporation). ¹H NMR (400 MHz, MeOD) δ 6.5 (p, *J* = 0.7 Hz, 0H), 6.4 (p, *J* = 0.7 Hz, 0H), 2.2 (s, 3H).

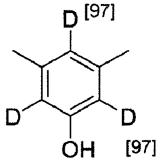

**2,4,6-[D₃]-3,5-Dimethylphenol-d₃** was prepared from 3,5-dimethylphenol (0.1 mmol, 12.2 mg) according to the General Procedure A for 6 d at 75 °C (100 µmol, 100% yield, 97% deuterium incorporation). ¹H NMR (400 MHz, MeOD) δ 6.9 (s, 1H), 6.6 (s, 0H), 6.5 (d, *J =* 8.1 Hz, 0H), 2.2 (t, *J* = 0.4 Hz, 3H), 2.2 (d, *J* = 0.6 Hz, 3H).

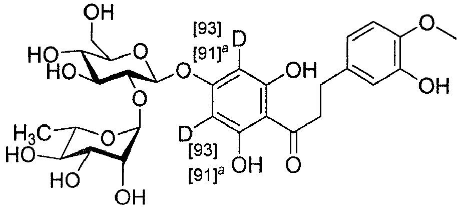

**6,8-[D₂]-Neohesperidine dihydrochalcone** was prepared from neohesperidine dihydrochalcone (0.1 mmol, 61.2 mg) according to the General Procedure A for 3 d at rt (90 µmol, 90% yield, 93% deuterium incorporation). d₆-DMSO (1 mL) was used as a co-solvent. ¹H NMR (400 MHz, MeOD) δ 6.8 (d, *J* = 8.2 Hz, 1H), 6.7 (d, *J* = 2.1 Hz, 1H), 6.7 (dd, *J* = 2.1, 8.2 Hz, 1H), 6.1 (s, 0H), 5.3 (d, *J* = 1.7 Hz, 1H), 5.0 (d, *J* = 7.4 Hz, 1H), 4.0 - 3.9 (m, 3H), 3.8 (s, 3H), 3.8 - 3.6 (m, 4H), 3.5 - 3.4 (m, 3H), 3.3 - 3.3 (m, 2H), 2.8 (dd, *J* = 6.9, 8.7 Hz, 2H), 1.3 (d, *J* = 6.2 Hz, 3H).

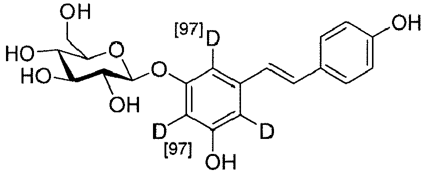

**2,4,6-[D₃]-Piceid** was prepared from piceid (0.1 mmol, 39.0 mg) according to the General Procedure A for 1 d at 40 °C (97 µmol, 97% yield, 97% deuterium incorporation). ¹H NMR (400 MHz, MeOD) δ 7.5 - 7.3 (m, 2H), 7.0 (d, *J =* 16.3 Hz, 1H), 6.9 (d, *J* = 16.3 Hz, 1H), 6.8 - 6.7 (m, 2H), 6.7 - 6.6 (m, 0H), 6.5 (s, 0H), 4.0 (dd, *J* = 2.2, 12.1 Hz, 1H), 3.7 (dd, *J* = 5.8, 12.1 Hz, 1H), 3.6 - 3.4 (m, 4H).

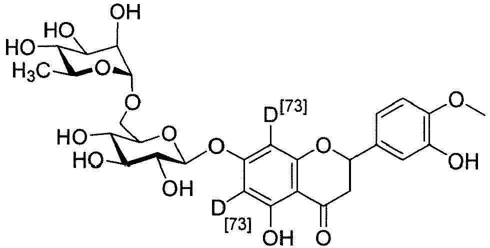

**6,8-[D₂]-Hesperidine** was prepared from hesperidine (0.1 mmol, 61.0 mg) according to the General Procedure A for 4 weeks at 40 °C (75 µmol, 75% yield, 73% deuterium incorporation). ¹H NMR (400 MHz, MeOD) δ 7.0 - 6.8 (m, 3H), 6.1 (dd, *J* = 1.2, 5.4 Hz, 0.5H), 5.4 (td, *J* = 4.2, 7.3 Hz, 1H), 4.9 (dd, *J* = 4.0, 7.5 Hz, 1H), 4.5 (d, *J* = 1.7 Hz, 1H), 3.8 - 3.8 (m, 1H), 3.8 (s, 3H), 3.7 (ddd, *J* = 1.7, 3.5, 9.3 Hz, 1H), 3.6 - 3.4 (m, 4H), 3.3 - 3.1 (m, 5H), 1.1 (dd, *J* = 3.0, 6.2 Hz, 3H).

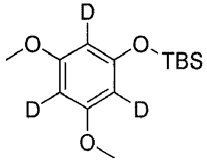

2,4,6-[D₃]-*tert*-Butyl(3,5-dimethoxyphenoxy)dimethylsilane was prepared from 1,3,5-trimethoxybenzene (0.1 mmol, 26.8 mg) according to the General Procedure A for 5 h at rt (83 µmol, 83% yield, 97% deuterium incorporation). ¹H NMR (400 MHz, MeOD) δ 0.1 (s, 1H), 0.2 (s, 6H), 0.9 (s, 2H), 1.0 (s, 8H), 3.7 (s, 1H), 3.7 (s, 6H), 6.0 (s, 0H).

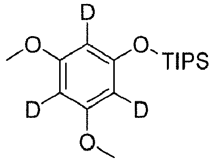

**2,4,6-[D₃]-(3,5-Dimethoxyphenoxy)triisopropylsilane** was prepared from (3,5-Dimethoxyphenoxy)triisopropylsilane (0.1 mmol, 31.1 mg) according to the General Procedure A for 5 h at rt (98 µmol, 98% yield, 97% deuterium incorporation). ¹H NMR (400 MHz, MeOD) δ 1.1 - 1.1 (m, 1H), 1.1 (s, 2H), 1.2 - 1.3 (m, 0H), 3.7 (s, 0H), 3.7 (s, 1H), 6.0 (s, 0H).

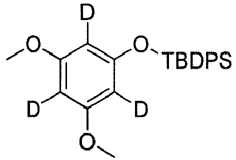

**2,4,6-[D₃]-*tert*-Butyl(3,5-dimethoxyphenoxy)diphenylsilane** was prepared from *tert*-butyl(3,5-dimethoxyphenoxy)diphenylsilane (0.1 mmol, 39.3 mg) according to the General Procedure A for 5 h at rt (100 µmol, 100% yield, 97% deuterium incorporation). ¹H NMR (400 MHz, MeOD) δ 1.0 (s, 0H), 1.1 (s, 9H), 3.5 (s, 6H), 3.7 (s, 0H), 5.9 (s, 0H), 6.0 (s, 0H), 7.3 - 7.5 (m, 6H), 7.7 - 7.7 (m, 4H).

### Upscaling:

**General Procedure B:** Substrate (1 mmol) was dissolved in MeOD-d₁ (10 mL). A 70% solution of HClO₄ (0.05 mmol, 5 mol%, 4.2 µL) was added and the mixture was stirred at the according temperature under argon.

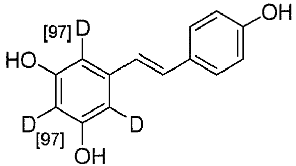

**2,4,6-[D₃]-Resveratrol** was prepared from resveratrol (1.0 mmol, 288 mg) according to the General Procedure B for 4 h at rt. The solvent was partly removed *in vacuo,* then, EtOAc and sat. NaHCO₃ (aq.) was added and the reaction mixture extracted with EtOAc (3x). The organic phases were combined, dried over Na₂SO₄ and the solvent was removed *in vacuo* to obtain the clean product as a yellowish solid (0.99 mmol, 231 mg, 100% yield, 97% deuterium incorporation). ¹H NMR (400 MHz, MeOD) δ 7.4 - 7.3 (m, 2H), 7.0 (d, *J* = 16.3 Hz, 1H), 6.9 - 6.8 (m, 3H), 6.5 (s, 0H), 6.2 (s, 0H). ¹³C NMR (101 MHz, MeOD) δ 115.1, 125.5, 127.4, 128.0, 139.7, 157.0, 158.1. HPLC (254 nm, system A): *t*_{R}= 6.5 min, purity: >95%. HRMS (EI) calcd. for C₁₄H₈D₃O₃ [M-H⁺]: 230.0892, found: 230.0902.

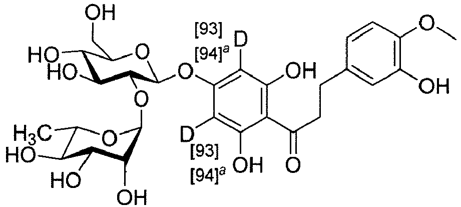

**6,8-[D₂]-Neohesperidine dihydrochalcone** was prepared from neohesperidine dihydrochalcone (1 mmol, 612 mg) according to the General Procedure B for 3 d at rt. d₆-DMSO (1 mL) was used as a co-solvent. After 3 d, the reaction was stopped by addition of one drop of sat. NaHCO₃ (aq.). After subsequent syringe filtration and reduction of the solvent *in vacuo,* the clean product was obtained as a white powder (0.97 mmol, 598 mg, 97% yield, 94% deuterium incorporation). ¹H NMR (400 MHz, MeOD) δ 6.8 (d, *J* = 8.2 Hz, 1H), 6.7 (d, *J* = 2.1 Hz, 1H), 6.7 (dd, *J* = 2.1, 8.2 Hz, 1H), 6.1 (s, 0H), 5.3 (d, *J* = 1.7 Hz, 1H), 5.0 (d, *J* = 7.4 Hz, 1H), 4.0 - 3.9 (m, 3H), 3.8 (s, 3H), 3.8 - 3.6 (m, 4H), 3.5 - 3.4 (m, 3H), 3.3 - 3.3 (m, 2H), 2.8 (dd, *J* = 6.9, 8.7 Hz, 2H), 1.3 (d, *J* = 6.2 Hz, 3H). ¹³C NMR (101 MHz, MeOD) δ 16.8, 30.0, 45.9, 55.1, 60.9, 68.5, 69.8, 70.7, 70.8, 72.5, 76.7, 77.4, 77.7, 94.8, 97.9, 101.0, 105.4, 111.4, 115.1, 119.1, 134.6, 145.9, 146.0, 163.2, 163.9, 205.5. HPLC (254 nm, system A): *t*_{R}= 4.9 min, purity: >95%. HRMS (EI) molecular weight could not be calculated due to fractionation. *m*/*z* (%) 615.2253 (100%), 616.2287 (35%), 617.2311 (5%).

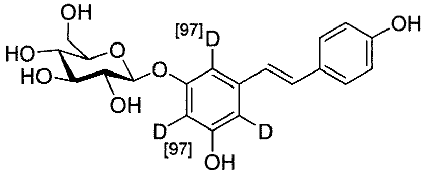

**2,4,6-[D_{3]}-Piceid** was prepared from piceid (1 mmol, 390 mg) according to the General Procedure B for 1 d at 40 °C. The solvent was removed *in vacuo* and residue was purified by trituration with CH₃CN to obtain the product as a white powder (0.84 mmol, 347 mg, 84 % yield, 95% purity, 97% deuterium incorporation). The product can additionally be purified via preparative HPLC (CH₃CN:H₂O - 5:95→85:15 over 15 min) to obtain the clean product as a white powder (>>95% purity, 97% deuterium incorporation). ¹H NMR (400 MHz, MeOD) δ 7.5 - 7.3 (m, 2H), 7.0 (d, *J* = 16.3 Hz, 1H), 6.9 (d, *J* = 16.3 Hz, 1H), 6.8 - 6.7 (m, 2H), 6.7 - 6.6 (m, 0H), 6.5 (s, 0H), 4.0 (dd, *J* = 2.2, 12.1 Hz, 1H), 3.7 (dd, *J* = 5.8, 12.1 Hz, 1H), 3.6 - 3.4 (m, 4H). ¹³C NMR (101 MHz, MeOD) δ 26.3, 61.2, 70.0, 73.5, 76.8, 101.0, 115.0, 125.1, 127.5, 128.5, 128.9, 139.8, 157.1, 158.1, 159.0. HPLC (254 nm, system B): *t*_{R}= 6.7 min, purity: >95%. HRMS (EI) calcd. for C₂₀H₁₉D₃O₃ [M-H⁺]: 394.1576, found 394.1585.

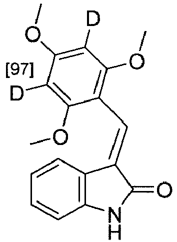

**3,5-[D₂]-3-(2,4,6-Trimethoxybenzylidene)indolin-2-one (IC261-d₂)** was prepared from 3-(2,4,6-trimethoxybenzylidene)indolin-2-one (IC261) (1 mmol, 311 mg, E/Z : 10:1) according to the General Procedure B for 1 d at 75 °C (100 µmol, 100% yield, 97% deuterium incorporation). CDCl₃ (1 mL) was used as a co-solvent. After 1 d, the reaction was stopped by addition of one drop of sat. NaHCO₃ (aq.). After subsequent syringe filtration and reduction of the solvent *in vacuo,* the clean product was obtained as a yellow powder (0.91 mmol, 285 mg, 91% yield, 96% deuterium incorporation, E/Z : 10:1). ¹H NMR (400 MHz, CDCl₃) δ 7.8 (s, 1H), 7.2 (td, *J* = 1.3, 7.6 Hz, 1H), 7.0 - 7.0 (m, 1H), 6.9 (ddd, *J* = 1.2, 6.6, 7.7 Hz, 2H), 6.2 (s, 0H), 3.9 (s, 3H), 3.8 (s, 6H). ¹³C NMR (101 MHz, CDCl₃) δ 55.5, 90.3, 109.3, 121.4, 124.4, 128.4, 129.0. HPLC (254 nm, system A): *t*_{R}= 7.4 min (*E*) and 7.8 min (*Z*), purity: >95%. HRMS (EI) calcd. for C₁₈H₁₆D₂NO₄ [M+H⁺]) calcd. for C₁₄H₈D₃O₃ [M-H⁺]: 314.1356, found: 314.1351.

### Variation of the deuterated solvent with 5 mol% HClO₄

**Experimental procedure:** 1,3,5-trimethoxybenzene (1, 0.1 mmol, 16.8 mg) was dissolved in the appropriate deuterated solvent (1 mL). If not stated differently, HClO₄ was added (0.005 mmol, 5 mol%, 0.42 µL). The reaction was kept at rt under air. After 30 min, the reaction was quenched by the addition of sat. NaHCO₃ (aq.) and the isotope ratios were measured via LC/MS (Single ion recording for the according masses).

| | **[M+3+H⁺]⁺ (d₃)** | **[M+2+H⁺]⁺ (d₂)** | **[M+1+H⁺]⁺ (d₁)** | **[M+H⁺]⁺(d₀)** |
|---|---|---|---|---|
| MeOD-d₄ | 81% | 17% | 2% | 0% |
| MeOD-d₁ | 81% | 17% | 2% | 0% |
| AcOD | 80% | 17% | 2% | 1% |
| DCOOD | 73% | 24% | 3% | 0% |
| D₃PO₄ | 68% | 23% | 7% | 2% |

### Variation of the acid (5 mol%) in CH₃OD

**Experimental procedure:** 1,3,5-trimethoxybenzene (1, 0.1 mmol, 16.8 mg) was dissolved in H₃COD (1 mL). The appropriate acid was added (0.005 mmol, 5 mol%). The reaction was kept at rt under air. After 30 min, 1 h, 6 h, and 30 h, the reaction was quenched by the addition of sat. NaHCO₃ (aq.) and the isotope ratios were measured via LC/MS (Single ion recording for the according masses).

### [M+3+H⁺]⁺ (d₃) - content

| | **30 min** | **1 h** | **6h** | **30 h** |
|---|---|---|---|---|
| **HClO₄** | 73% | 90% | 90% | 90% |
| **H₂SO₄** | 73% | 91% | 92% | 91% |
| **HBr** | 71% | 88% | 90% | 91% |
| **MsOH** | 70% | 90% | 92% | 91% |
| **TfOH** | 70% | 89% | 91% | 91% |
| **HCl** | 28% | 61% | 91% | 91% |
| **HNO₃** | 3% | 9% | 81% | 91% |
| **NaHSO₄** | 1% | 7% | 72% | 92% |
| **TFA** | 0% | 1% | 13% | 78% |

## Claims

1. A method for the preparation of a deuterated or tritiated aromatic compound via deuteration or tritiation of an aromatic starting compound which comprises an aromatic ring or a fused aromatic ring system which may be carbocyclic or hetercyclic and which carries at least one hydrogen atom directly bonded to a carbon ring atom of an aromatic ring, said method comprising:
a) providing a liquid composition wherein the aromatic starting compound is dissolved or dispersed in a deuterated or tritiated solvent which is not water, or in a solvent system comprising at least one deuterated or tritiated solvent which is not water; and
b) replacing at least one hydrogen atom directly bonded to a carbon ring atom of an aromatic ring comprised by the aromatic starting compound with deuterium or tritium via the transfer of at least one deuterium of tritium atom from the deuterated or tritiated solvent to the aromatic starting compound dissolved or dispersed in the liquid composition in the presence of an acid,
to convert the aromatic starting compound to a deuterated or tritiated aromatic compound which comprises an aromatic ring or a fused aromatic ring system which may be carbocyclic or hetercyclic and which carries at least one deuterium or tritium atom directly bonded to a carbon ring atom of an aromatic ring.

2. The method in accordance with claim 1, wherein the aromatic starting compound is selected from
an aromatic starting compound i) comprising a six-membered carbocyclic aromatic ring or a fused aromatic ring system comprising a six-membered carbocyclic aromatic ring, wherein the six-membered aromatic ring carries at least one hydrogen atom directly bonded to a carbon ring atom and at least a first substituent and a second substituent, the first substituent being selected from hydroxy, alkoxy, haloalkoxy, cycloalkoxy, and alkenyloxy, and the second substituent being selected from hydroxy, alkoxy, haloalkoxy, cycloalkoxy, heterocycloalkoxy, alkenyloxy, arylalkyloxy, aryloxy, heteroaryloxy, halogen, alkyl, cycloalkyl, heterocycloalkyl, aryl which is substituted with at least one substiutent selected from hydroxy and alkoxy, heteroaryl which is selected from furan, pyrrole, thiophen, indole, oxazole, thiazole, and benzofuran, amino, -NHR⁴, and -NR⁴R⁵, wherein R⁴ and R⁵ are independently selected from alkyl, cycloalkyl, haloalkyl, arylalkyl, heteroarylalkyl, aryl and heteroaryl, and wherein, if the second substituent is a cycloalkyl group or a heterocycloalkyl group, the group may be fused with the six-membered aromatic ring; and
an aromatic starting compound ii) comprising a five-membered heterocyclic aromatic ring or a fused aromatic ring system comprising a five-membered heterocyclic aromatic ring, wherein the five-membered aromatic ring carries at least one hydrogen atom directly bonded to a carbon atom of the aromatic ring.

3. The method in accordance with claim 2, wherein the first and the second substituent of the six-membered aromatic ring are selected from hydroxy and alkoxy.

4. The method in accordance with any of claims 1 to 3, wherein the five-membered heterocyclic aromatic ring or fused aromatic ring system comprising a five-membered heterocyclic aromatic ring of the aromatic starting compound ii) is selected from an optionally substituted pyrrole group, an optionally substituted thiophene group, an optionally substituted furan group and an optionally substituted indole group.

5. The method in accordance with any of claims 1 to 4, wherein the five-membered heterocyclic aromatic ring or fused aromatic ring system comprising a five-membered heterocyclic aromatic ring of the aromatic starting compound ii) carries at least one substituent selected from hydroxy, alkoxy, haloalkoxy, cycloalkoxy, and alkenyloxy.

6. The method in accordance with any of claims 1 to 5, wherein the liquid composition comprises a deuterated or tritiated solvent selected from:
s1) an aliphatic alcohol comprising a deuterated or tritiated alcoholic hydroxyl group;
s2) an aromatic or heteroaromatic alcohol comprising a deuterated or tritiated alcoholic hydroxyl group;
s3) a compound comprising a carbonyl group and a deuterium or tritium atom bonded to a carbon atom or a heteroatom in alpha-position to the carbonyl group;
s4) a nitroalkane comprising a deuterium or tritium atom bonded to a carbon atom in alpha position to the nitro group;
s5) a carboxylic acid which comprises a deuterated or tritiated -C(O)OH group;
s6) an amide which comprises a deuterated or tritiated -C(O)NH- group;
s7) an oxime or a hydroximic acid which comprises a deuterated or tritiated =N-OH group; and
s8) a peroxide which comprises a deuterated or tritiated -OOH group.

7. The method in accordance with claim 6, wherein the liquid composition comprises the deuterated or tritiated solvent selected from s1) to s8) as a single solvent, or as a component of a solvent system comprising at least one deuterated or tritiated solvent which is not water, and wherein the solvent system combines two or more of the deuterated or trititated solvents selected from s1) to s8), or it combines one of the deuterated or tritiated solvents selected from s1) to s8) with one or more other deuterated or tritiated solvent(s), and/or with one or more non-deuterated and non-tritiated solvent(s).

8. The method in accordance with claim 6 or 7, wherein the liquid composition comprises a deuterated or tritiated solvent selected from an aliphatic alcohol s1) comprising a deuterated or tritiated alcoholic hydroxyl group, an aromatic or heteroaromatic alcohol s2) comprising a deuterated or tritiated alcoholic hydroxyl group, and a carboxylic acid s5) which comprises a deuterated or tritiated -C(O)OH group.

9. The method in accordance with any of claims 6 to 8, wherein the liquid composition comprises at least one of methanol comprising a deuterated or tritiated hydroxy group and ethanol comprising a deuterated or tritiated hydroxy group.

10. The method in accordance with any of claims 1 to 9, wherein the liquid composition comprised a deuterated or tritiated solvent at a volume fraction of above 25 % vol/vol, based on the total volume of solvent(s).

11. The method in accordance with any of claims 1 to 10, wherein the replacement of the at least one hydrogen atom is accomplished in the presence of an acid having a pKa value in water which is lower than 3.

12. The method in accordance with any of claims 1 to 11, wherein the acid is selected from hydrobromic acid, hydrochloric acid, sulfuric acid, triflic acid, mesylic acid, tosylic acid, perchloric acid and combinations thereof.

13. The method in accordance with any of claims 1 to 6, wherein the acid is present at a concentration of 1 mol% to 50 mol %, based on the amount of the aromatic starting compound as 100 mol%.

14. The method in accordance with any of claims 1 to 13, wherein the replacement of the at least one hydrogen atom is accomplished at a reaction temperature in the range of 0 °C to 80 °C.

15. The method in accordance with any of claims 1 to 14, wherein the replacement of the at least one hydrogen atom is accomplished over a reaction time of 20 min to 5 days.
